# EUROPEAN PATENT SPECIFICATION

(11) **EP 3 614 736 B1**
(45) Date of publication and mention of the grant of the patent: **18.01.2023**
(21) Application number: 18816824.9
(22) Date of filing: 11.06.2018
(51) Int. Cl.: H04W 36/00, H04W 36/02, H04L 47/34

(54) **HANDOVER CONTROL METHOD AND APPARATUS**
VERFAHREN UND VORRICHTUNG ZUR ÜBERGABESTEUERUNG
PROCÉDÉ ET APPAREIL DE GESTION DE TRANSFERTS

(30) Priority: 13.06.2017 CN 201710442797
(43) Date of publication of application: 26.02.2020
(73) Proprietor: Huawei Technologies Co., Ltd., Longgang District Shenzhen, Guangdong 518129 (CN)
(72) Inventor: JIN, Yinghao, Shenzhen, Guangdong 518129 (CN); YANG, Yang, Shenzhen, Guangdong 518129 (CN); LI, Hong, Shenzhen, Guangdong 518129 (CN); HAN, Feng, Shenzhen, Guangdong 518129 (CN)
(74) Representative: Goddar, Heinz J.
(86) International application number: PCT/CN2018/090687
(87) International publication number: WO 2018/228342

(56) References cited:
- WO-A1-2014/019240
- WO-A1-2014/019240
- CN-A- 103 313 325
- US-A1- 2017 078 914
- HUAWEI ET AL: "Discussion on NR-LTE handover under 5GCN", 3GPP DRAFT; R2-1703383 DISCUSSION ON LTE-NR HANDOVER PROCEDURE UNDER NGC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Spokane, USA; 20170403 - 20170407 3 April 2017 (2017-04-03), XP051245245, Retrieved from the Internet: URL:http://www.3gpp.org/ftp/Meetings_3GPP_ SYNC/RAN2/Docs/ [retrieved on 2017-04-03]
- ZTE ET AL: "Further discussion on the new UP protocol layer for QoS", 3GPP DRAFT; R2-1701119 FURTHER DISCUSSION ON THE NEW UP PROTOCOL LAYER FOR QOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Athens, Greece; 20170213 - 20170217 12 February 2017 (2017-02-12), XP051211831, Retrieved from the Internet: URL:http://www.3gpp.org/ftp/Meetings_3GPP_ SYNC/RAN2/Docs/ [retrieved on 2017-02-12]
- HUAWEI: "Lossless HO of QoS Flow", 3GPP DRAFT; R2-1704979 LOSSLESS HANDOVER OF QOS FLOW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275487, Retrieved from the Internet: URL:http://www.3gpp.org/ftp/Meetings_3GPP_ SYNC/RAN2/Docs/ [retrieved on 2017-05-14]
- HUAWEI: "Lossless HO of QoS Flow", 3GPP TSG-RAN WG2 Meeting #98, R2-1704979, 6 May 2017 (2017-05-06), XP051264662,

## Description

### TECHNICAL FIELD

The present invention relates to the field of wireless communications, and in particular, to handover control methods and to the corresponding terminal device, source base station and target base station.

### BACKGROUND

In a long term evolution (Long Term Evolution, LTE) system, a data plane protocol layer of an air interface (air interface) includes a packet data convergence protocol (packet data convergence protocol, PDCP) layer, radio link control (radio link control, RLC), a media access control (media access control, MAC) layer, and a physical (PHY) layer. For downlink data packets, a core network device performs filtering on the data packets based on quality of service (quality of service, QoS) attributes of the data packets and maps the data packets to a bearer, and then transmits the data packets to a base station. Subsequently, the base station sends the data packets to a terminal device by using the same bearer.

With rapid development of wireless communications technologies, a fifth-generation (5th Generation, 5G) wireless communications technology has been a popular subject in the industry currently. A service data adaptation protocol (service data adaption protocol, SDAP) layer is newly added to a data plane protocol layer of an air interface of a 5G access network. In 5G, the core network device no longer transmits the data packets to the base station by using the bearer, but transmits the data packets to the base station in a form of a QoS flow. The QoS flow may include one or more data packets having similar QoS attributes. After receiving one or more QoS flows, the base station maps the one or more QoS flows to a data radio bearer (data radio bearer, DRB) at an SDAP layer, and sends the one or more QoS flows to the terminal device by using the bearer.

In LTE, the data packet is transmitted between a core network and the base station and between the base station and the terminal device by using a same bearer. Therefore, when the terminal device is handed over, the bearer does not change. To be specific, a bearer between the terminal device and a source base station before the handover and a bearer between the terminal device and a target base station after the handover are consistent. In 5G, the data packet is transmitted between the core network and the base station in a form of a QoS flow, and the data packet is transmitted between the base station and the terminal device by using a bearer. Different base stations have different function configurations and the like. Therefore, mapping of a QoS flow to the DRB by the different base stations may be different. For example, the source base station supports both a massive machine type communications service and a mobile broadband service. Therefore, when the terminal device simultaneously performs the massive machine type communications service and the mobile broadband service, the source base station may use two DRBs to separately provide corresponding services for the terminal device. When the terminal device moves and needs to be handed over to the target base station, and the target base station supports only the mobile broadband service, the target base station needs to remap the massive machine type communications service and the mobile broadband service on the two DRBs for communication between the terminal device and the source base station to a DRB of the mobile broadband service supported by the target base station. Therefore, when the terminal device is handed over, DRB remapping may occur. To be specific, a mapping relationship between an established QoS flow of the terminal device and a DRB may change. For example, a DRB to which the established QoS flow of the terminal device is mapped remains unchanged before and after the handover (to be specific, a target DRB is the same as a source DRB), or the established QoS flow of the terminal device may be mapped from one source DRB before the handover to another DRB after the handover (to be specific, the target DRB is different from the source DRB), or a plurality of established QoS flows of the terminal device may be mapped from one source DRB before the handover to a plurality of destination DRBs after the handover (to be specific, a quantity of the target DRBs is greater than a quantity of source DRBs), or a plurality of QoS flows for communication of the terminal device may be mapped from a plurality of source DRBs before the handover to one destination DRB after the handover (to be specific, a quantity of target DRBs is less than a quantity of the source DRBs). In other words, a quantity of source DRBs before the handover of the terminal device corresponds to an undetermined quantity of target DRBs after the handover. Therefore, an existing LTE handover control manner cannot implement lossless (lossless) handover of the terminal device in this scenario. The lossless handover means no data packet loss occurs before and after the terminal device is handed over.

In addition, in a converged 5G network, when the terminal device is handed over between a next-generation radio (next-generation radio, NR) base station and an evolved LTE base station, because a length of a sequence number (sequence number, SN) used by a PDCP entity in an NR system is different from a length of an SN used by a PDCP entity in the LTE system, an SN needs to be reconfigured after the handover. To be specific, the target base station needs to reconfigure SNs of all data packets that are processed by the PDCP entity and that are transmitted between the terminal device and the target base station after the handover. Due to SN reconfiguration, some data packets that are sent by the source base station to the terminal device before the handover and that are not correctly received by the terminal device cannot be retransmitted to the terminal device by the target base station. Consequently, data packet loss occurs on the terminal device during the handover. In another case, when configurations of the source base station and the target base station are different, for example, when protocol versions supported by the source base station and the target base station are different, the target base station cannot identify some configuration information of the source base station, and consequently, the target base station needs to reconfigure the SNs of all the data packets that are processed by the PDCP entity and that are transmitted between the terminal device and the target base station after the handover. The reconfiguration is also referred to as full configuration (full configuration). In this case, data packet loss may also be caused to the terminal device during the handover.

Currently, how to implement lossless handover of the terminal device in the foregoing scenario to ensure that no data packet loss occurs on the terminal device during the handover has not been properly resolved yet.

WO 2014/019240 A1 discloses a data processing method. Said data processing method comprises: when a UE switches from source base station to target base station, said source base station sends data packets unacknowledged by said UE in downlink normal PDCP sequence number window and residual data packets in downlink extended PDCP sequence number window to target base station, said data packets in downlink normal PDCP sequence number window are excluded from said residual data packets in downlink extended PDCP sequence number window, wherein said downlink normal PDCP sequence number window is included in said downlink extended PDCP number sequence window, and said downlink extended PDCP sequence number window and said downlink normal PDCP sequence number window have the same starting position.

HUAWEI ET AL, "Discussion on NR-LTE handover under 5GCN", 3GPP DRAFT; R2-1703383; 3GPP TSG-RAN WG2 #97BIS; Spokane, USA, 20170403 - 20170407 discusses details of handover between NR and LTE-5GC connected, from the perspective of, PDCP configuration, SN length change, QoS flow<->RB remapping, as well as PDCP and new QoS layer related operations for data forwarding.

### SUMMARY

This application provides handover control methods, a terminal device, a source base station and a target base station in the independent claims, to implement lossless handover of a terminal device in a moving process, and effectively ensure QoS of a service of the terminal device during the handover. Possible implementation manners are disclosed in the dependent claims.

These and other aspects of the present invention are clearer and easier to understand in descriptions of the following (a plurality of) embodiments.

### BRIEF DESCRIPTION OF DRAWINGS

The following briefly describes the accompanying drawings used for describing the embodiments of this application or the prior art.
FIG. 1 shows a communications scenario according to an embodiment of this application;
FIG. 2 is a schematic flowchart of a handover control process according to an embodiment of this application;
FIG. 3 is a schematic diagram of a format of information about the downlink first unacknowledged SDU of a PDCP according to an embodiment of this application;
FIG. 4 is a schematic flowchart of another handover control process according to an embodiment of this application;
FIG. 5 is a schematic flowchart of still another handover control process according to an embodiment of this application;
FIG. 6 is a schematic diagram of a manner of indicating the last downlink PDCP SDU according to an embodiment of this application;
FIG. 7 is a schematic diagram of another manner of indicating the last downlink PDCP SDU according to an embodiment of this application;
FIG. 8 is a schematic flowchart of yet another handover control process according to an embodiment of this application;
FIG. 9 is an example diagram of data transmission in a handover control process according to an embodiment of this application;
FIG. 10 is a schematic block diagram of a terminal device according to an embodiment of this application;
FIG. 11 is another schematic block diagram of a terminal device according to an embodiment of this application;
FIG. 12 is a schematic block diagram of a base station according to an embodiment of this application; and
FIG. 13 is another schematic block diagram of a base station according to an embodiment of this application.

### DESCRIPTION OF EMBODIMENTS

The following describes the embodiments of this application with reference to the accompanying drawings in the embodiments of this application.

In this application, the word "exemplary" is used to represent giving an example, an illustration, or a description. Any embodiment described as "exemplary" in this application should not be explained as being more preferred or having more advantages than another embodiment. To enable any person skilled in the art to implement and use the present invention, the following description is provided. In the following description, details are set forth for the purpose of explanation. It should be understood by a person of ordinary skill in the art that the present invention can be implemented without these specific details. In other examples, well-known structures and processes are not described in detail to avoid obscuring the description of the present invention with unnecessary details.

In the specification, claims, and the accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, product, or device.

The terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Specific embodiments are used below to describe in detail the technical solutions of the present invention. The following several specific embodiments may be combined with each other, and a same or similar concept or process may not be described repeatedly in some embodiments.

It should be understood that the embodiments of this application may be applied to various communications systems, for example, a global system for mobile communications (Global System for Mobile communications, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), LTE, an LTE frequency division duplex (Frequency Division Duplex, FDD) system, an LTE time division duplex (Time Division Duplex, TDD) system, a long term evolution advanced (Advanced long term evolution, LTE-A) system, a universal mobile telecommunications system (Universal Mobile Telecommunication System, UMTS), or a next-generation wireless communications system, such as a new radio (New Radio, NR) system or an evolved LTE (evolved LTE, eLTE).

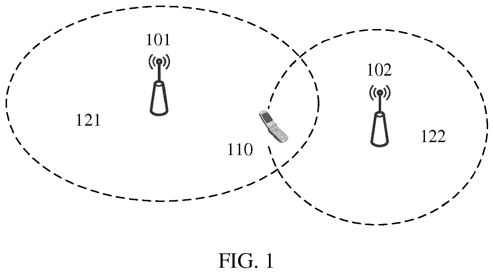

A handover control method and an apparatus provided in the embodiments of this application are applicable to control of handover of a terminal device moving between cells controlled by different base stations. FIG. 1 shows a communication scenario according to an embodiment of this application. A terminal device 110 moves and is handed over from a cell 121 controlled by a base station 101 to a cell 122 controlled by a base station 102. The base station 101/102 in FIG. 1 may be an access point (access point, AP) in a WLAN or a base transceiver station (base transceiver station, BTS) in GSM or CDMA, or may be a NodeB (NodeB, NB) in WCDMA, or may be an evolved NodeB (evolved NodeB, eNB or eNodeB) in LTE, or a relay station or an access point, or a vehicle-mounted device, a wearable device, and a network device in a future 5G network or an access network device in a future evolved PLMN network, for example, may be, a base station (for example, a next-generation NodeB (next-generation NodeB, gNB) or a next-generation radio (next-generation radio, NR) node), a transmission reception point (transmission and reception point, TRP), a centralized processing unit (centralized unit, CU), or a distributed processing unit (distributed unit, DU) in 5G. It should be understood that the terminal device 110 communicates with the base station 101/102 by using a transmission resource (for example, a frequency domain resource, namely, a spectrum resource) used in a cell managed by the base station 101/102. The cell may belong to a macro cell (macro cell), a hyper cell (hyper cell), or a small cell (small cell). The small cell herein may include: a metro cell (metro cell), a micro cell (micro cell), a pico cell (pico cell), a femto cell (femto cell), and the like. These small cells have features of small coverage and low transmit power, and are applicable to providing a high-rate data transmission service.

The terminal device 110 may also be referred to as user equipment (User Equipment, UE), an access terminal, a subscriber unit, a subscriber station, a mobile station, a mobile station, a remote station, a remote terminal, a mobile device, a user terminal, a terminal, a wireless communications device, a user agent, or a user apparatus. The terminal device 110 may be a station (station, ST) in a wireless local area network (Wireless Local Area Networks, WLAN), and may be a cellular phone, a cordless phone, a session initiation protocol (Session Initiation Protocol, SIP) phone, a wireless local loop (Wireless Local Loop, WLL) station, a personal digital processing (personal digital assistant, PDA) device, a handheld device having a wireless communication function, a relay device, a computing device, or another processing device connected to a wireless modem, a vehicle-mounted device, a wearable device, and a terminal device in a next-generation communications system such as a 5G network or a future evolved public land mobile network (Public Land Mobile Network, PLMN) network. In an example rather than a limitation, in this embodiment of this application, the terminal device 110 may alternatively be a wearable device. The wearable device may also be referred to as a wearable intelligent device, and is a generic name of wearable devices such as glasses, gloves, a watch, clothes, and shoes that are developed by applying wearable technologies in intelligent designs of daily wear. The wearable device is a portable device that is directly worn on a body or integrated into clothes or an accessory of a user. The wearable device is not merely a hardware device, and further implements powerful functions through software support, data exchange, and cloud interaction. Generalized wearable intelligent devices include full-featured and large-size devices that can implement complete or partial functions without depending on smartphones, for example, smart watches or smart glasses, and devices that focus on only one type of application function and need to work with other devices such as smartphones, for example, various smart bands or smart jewelry for monitoring physical signs.

When the terminal device communicates with a mobile network, the terminal device may simultaneously establish one or more DRBs for communication of one or more services. A serving base station includes a PDCP entity corresponding to each DRB for communication of the terminal device, to process a data packet of the DRB. Specifically, for downlink transmission, the serving base station uses a data packet of each DRB as a service data unit (service data unit, SDU) of the PDCP entity corresponding to the DRB, then performs operations such as header compression and encryption on the SDU by using the PDCP entity, to form a PDCP layer protocol data unit (protocol data unit, PDU), and then processes the PDU at an RLC/MAC/PHY layer and transmits the processed PDU to the terminal device. Due to a fading characteristic and a time-varying characteristic of a radio link, packet loss occurs during data transmission between the serving base station and the terminal device. For example, the serving base station sends, to the terminal device, downlink PDCP SDUs whose sequence number SNs are 1 to 6. In Example 1, the terminal device correctly receives the PDCP SDUs whose SNs are 1 to 3 and loses the PDCP SDUs whose SNs are 4 to 6. In Example 2, the terminal device correctly receives the PDCP SDUs whose SNs are 1, 3, and 5, and loses PDCP SDUs whose SNs are 2, 4, and 6. To ensure that the terminal device correctly receives all data sent by the serving base station, an acknowledgment mode (acknowledgement mode, AM) is used at the RLC layer for the data transmission between the terminal device and the serving base station. To be specific, after receiving each data packet sent by the serving base station, the terminal device needs to feed back, to the serving base station, an indication indicating whether the data packet is successfully received. For example, the terminal device sends an ACK acknowledgement message if the terminal device successfully receives a data packet, or the terminal device sends a NACK negative acknowledgement message if the terminal device does not successfully receive a data packet. The serving base station retransmits, to the terminal device, the data packet corresponding to the received NACK indication. In a manner, a PDCP entity of the serving base station may learn, by using the RLC entity based on an ACK or NACK indication fed back by the terminal device, whether a downlink PDCP SDU is correctly received by the terminal device. In another manner, the terminal device may send a PDCP status report to the serving base station periodically or in an event-triggered manner, to notify the serving base station of a receive status of the downlink PDCP SDUs sent by the serving base station. Referring to stipulations in the 3GPP protocol specification TS36.323 v14.0.1, the PDCP status report includes information about the first missing SDU (first missing SDU, FMS), to notify the base station of an SN of the first PDCP SDU that the terminal device cannot correctly receive. For example, in Example 1, for the PDCP SDUs whose SNs are 1 to 3, the terminal device feeds back ACK indications at the RLC layer to the serving base station, and for the other PDCP SDUs, feeds back NACK indications, and may feed back FMS=4 to the base station in a subsequent PDCP status report, to indicate that an SN of the first missing SDU of the terminal device is 4. In this case, the terminal device correctly receives, in sequence, the PDCP SDUs whose SNs are 1 to 3. In Example 2, for only the PDCP SDUs whose SNs are 1, 3, and 5, the terminal device feeds back ACK indications at the RLC layer to the serving base station, and for the other PDCP SDUs, feeds back NACK indications, and may feed back FMS=2 to the base station in a subsequent PDCP status report, to indicate that an SN of the first missing SDU of the terminal device is 2. In this case, the terminal device correctly receives, in sequence, the PDCP SDU whose SN is 1, and the PDCP SDUs whose SNs are 3 and 5 are correctly received out of sequence (out-of-sequence). Further, the terminal device may further add a bitmap (bitmap) field to the PDCP status report, to indicate a status of receiving, by the terminal device, subsequent PDCP SDUs starting from the FMS. A bit whose value is "0" in the bitmap indicates that the terminal device cannot correctly receive a PDCP SDU that is after the FMS and that corresponds to an SN corresponding to the bit. A bit whose value is "1" in the bitmap indicates that the terminal device already correctly receives a PDCP SDU that is after the FMS and that corresponds to an SN corresponding to the bit. For example, in Example 1, the terminal device adds FMS=4 and a value of the bitmap being "00" to the PDCP status report, to indicate that the terminal device cannot correctly receive the PDCP SDUs whose SNs are 5 and 6 either. In Example 2, the terminal device adds FMS=2 and a value of the bitmap being "1010" to the PDCP status report, to indicate that the terminal device correctly receives, out of sequence, the PDCP SDUs whose SNs are 3 and 5 after the FMS whose SN is 2, and does not correctly receive the PDCP SDUs whose SNs are 4 and 6.

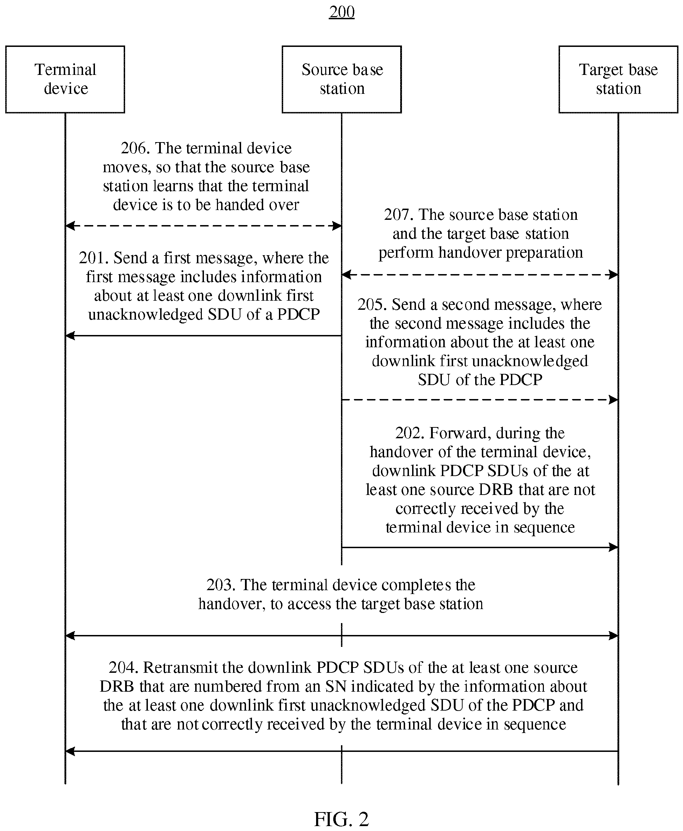

The following describes in detail method embodiments of this application with reference to FIG. 2 to FIG. 9. Specific embodiments are used below to describe in detail the technical solutions of this application. The following several specific embodiments may be combined with each other, and a same or similar concept or process may not be described repeatedly in some embodiments. It should be understood that FIG. 2 to FIG. 9 are schematic flowcharts of the communication method in the embodiments of this application, and show detailed communication steps or operations of the method. However, these steps or operations are only examples. Alternatively, in the embodiments of this application, another operation or variations of the operations in FIG. 2 to FIG. 9 may be performed. In addition, the steps in FIG. 2 to FIG. 9 may be performed in sequences different from sequences presented in FIG. 2 to FIG. 9, and not all the operations in FIG. 2 to FIG. 9 may be necessarily performed.

FIG. 2 is a schematic flowchart of a handover control method according to an embodiment of this application. The method 200 may be applied to the communication scenario shown in FIG. 1. The procedure described in FIG. 2 is applied when a terminal device moves and is handed over from a cell controlled by a source base station to a cell controlled by a target base station, and corresponds to SN reconfiguration, full configuration, and a case in which a quantity of destination DRBs is greater than or equal to a quantity of source DRBs. The procedure includes the following steps.

201. The source base station sends a first message to the terminal device, where the first message includes information about at least one downlink first unacknowledged SDU of a PDCP.

In this embodiment of this application, the source base station sends the first message to the terminal device, to instruct the terminal device to be handed over to the target base station. The first message includes the information about the at least one downlink first unacknowledged SDU of the PDCP. The information about the at least one downlink first unacknowledged SDU (first unacknowledged SDU, FUS) of the PDCP is used to indicate an SN of a downlink PDCP SDU that is the first one of SDUs that are of at least one source DRB for communication between the terminal device and the source base station before the handover and that are not correctly received by the terminal device. It should be understood that the first downlink PDCP SDU that is not correctly received by the terminal device is the first downlink PDCP SDU that is learned of by the source base station and that is not correctly received by the terminal device. There may be a plurality of learning manners. In an example, the first downlink PDCP SDU that is not correctly received by the terminal device is learned of by a PDCP entity of the source base station by using an RLC entity based on an ACK or NACK indication fed back by the terminal device. For example, the PDCP entity uses, as the SN of the first downlink PDCP SDU that is not correctly received by the terminal device, an SN of a next PDCP SDU of all downlink PDCP SDUs that are indicated by the RLC entity and that are correctly received by the terminal device in sequence. In another example, the first downlink PDCP SDU that is not correctly received by the terminal device is learned of by a PDCP entity of the source base station by using a latest PDCP status report reported by the terminal device. For example, the base station uses, as the SN of the first downlink PDCP SDU that is not correctly received by the terminal device, an SN that is of the FMS and that is in the PDCP status report.

Before the handover of the terminal device, the source base station is a serving base station of the terminal device. The terminal device may communicate with the source base station by using one or more source DRBs. For a source DRB, some of downlink PDCP SDUs transmitted by the source base station to the terminal device may be correctly received by the terminal device, and some may not be correctly received by the terminal device. In addition, some of the correctly received PDCP SDUs may be correctly received by the terminal device in sequence (in-sequence), and some are correctly received by the terminal device out of sequence. When the source base station sends, to the terminal device, the first message for instructing the handover, the source base station sends, to the terminal device, an SN of a next PDCP SDU of one or more downlink PDCP SDUs that are of the at least one source DRB for communication between the source base station and the terminal device and that are correctly received by the terminal device in sequence. The next PDCP SDU is the first one of PDCP SDUs that are of the source DRB and that are not correctly received by the terminal device. The source base station uses, as the information about the FUS, an SN of at least one first downlink PDCP SDU that is not correctly received by the terminal device, adds the information about the FUS to the first message, and sends the first message to the terminal device. Specifically, the source base station adds, to the first message, an identifier of at least one source DRB for the terminal device, where the at least one source DRB is admitted by the target base station. The source base station may add, after an identifier of each admitted source DRB, information about the downlink FUS of a PDCP corresponding to the source DRB. It should be understood that a quantity of DRBs for the terminal device that are admitted by the target base station depends on a quantity of source DRBs for communication between the terminal device and the source base station, a resource status of the target base station, and the like. Generally, the quantity of DRBs for the terminal device that are admitted by the target base station is less than or equal to the quantity of source DRBs. A DRB admitted by the target base station is used, after the handover of the terminal device, as a target DRB for communication between the terminal device and the target base station. The source base station sends the information about the FUS to the terminal device, so that the terminal device knows, when accessing the target base station after the handover, the SN of the first downlink PDCP SDU retransmitted from the target base station.

The source base station may learn of, in a plurality of manners, downlink PDCP SDUs correctly received by the terminal device in sequence, and therefore determine the information about the FUS. For example, for a source DRB, the source base station may learn of, from an ACK indication at an RLC layer that is fed back by the terminal device, downlink PDCP SDUs that are correctly received by the terminal device in sequence, and increases, by 1, a value of an SN of the last (namely, the last one) downlink PDCP SDU correctly received in sequence, to determine the information about the FUS. The source base station may further use, as the information about the FUS, information about the FMS in a latest PDCP status report sent by the terminal device.

For example, the first message may be a radio resource control (radio resource control, RRC) reconfiguration message including mobility control information, or the first message may be a handover command. The first message is used to instruct the terminal device to be handed over.

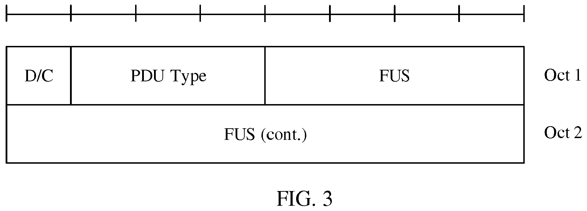

Optionally, the source base station may not add the information about the at least one downlink first unacknowledged SDU of the PDCP to the first message to send the information about the at least one downlink first unacknowledged SDU of the PDCP to the terminal device. In this case, for a source DRB, a PDCP entity of the source base station sends a third message to the terminal device. The third message includes the information about the at least one downlink first unacknowledged SDU of the PDCP. The third message is used to indicate a transmit status of the downlink PDCP SDUs of the at least one source DRB of the source base station. A sequence of sending the first message and the third message is not limited in this specification. Optionally, the third message is a PDCP transmit status report. The PDCP transmit status report is similar to a PDCP status report defined in the 3GPP protocol specification TS36.323 v14.0.1. For example, FIG. 3 is a schematic diagram of a format of the information about the FUS included in the third message. A D/C field is used to indicate that a PDU is a control PDU or a data PDU. A PDU type field is used to indicate a type of the PDU. In a current protocol specification, types of PDUs include a PDCP status report, an LWA status report, and the like. A new PDU type value may be added to indicate that the control PDU is used to send the information about the downlink FUS of the PDCP to the terminal device.

It should be understood that information about the first unacknowledged SDU of the PDCP may also be represented by using another name or field, provided that the name or field is used to indicate an SN of a downlink PDCP SDU that is the first one of SDUs that are of one source DRB for communication between the terminal device and the source base station before the handover and that are not correctly received by the terminal device. This is not limited in this specification.

202. The source base station forwards, to the target base station during the handover of the terminal device, downlink PDCP SDUs of the at least one source DRB that are not correctly received by the terminal device in sequence.

In this embodiment of this application, for a source DRB, the source base station sequentially forwards, to the target base station in a sequence of SNs of downlink PDCP SDUs of the source DRB, downlink PDCP SDUs that are not correctly received by the terminal device in sequence. It should be understood that a quantity of source DRBs forwarded by the source base station depends on the quantity of DRBs for the terminal device that are admitted by the target base station. For a source DRB, the source base station may forward, in a plurality of manners, downlink PDCP SDUs that are not correctly received by the terminal device in sequence. In a manner, the source base station forwards, to the target base station, both the downlink PDCP SDUs and SNs allocated by the source base station to the downlink PDCP SDUs. In another manner, the source base station forwards, to the target base station, the downlink PDCP SDUs without carrying SNs allocated by the source base station to the downlink PDCP SDUs.

Optionally, before step 202, the method further includes step 205.

205. The source base station sends a second message to the target base station, where the second message includes the information about the at least one downlink first unacknowledged SDU of the PDCP.

In this embodiment of this application, after instructing the terminal device to be handed over, the source base station initiates the second message to the target base station, and the second message is used to indicate an SN of a PDCP SDU forwarded (transfer) by the source base station to the target base station during the handover of the terminal device. The second message includes the information about the at least one downlink first unacknowledged SDU of the PDCP, and the information is used to indicate the transmit status of the downlink PDCP SDUs of the at least one source DRB of the source base station before the handover of the terminal device. The transmit status indicates an SN of a downlink PDCP SDU that is the first one of downlink PDCP SDUs of the at least one source DRB that are sent by the source base station before the handover of the terminal device and that are not correctly received by the terminal device. Specifically, the information about the downlink first unacknowledged SDU of the PDCP is consistent with the information about the FUS in step 201. The source base station sends the information about the FUS to the target base station, so that the target base station knows, when the terminal device completes the handover to access the target base station, the SN of the first downlink PDCP SDU retransmitted to the terminal device.

For example, the second message may be an SN status transfer message. Table 1 shows an SN status transfer message including the information about the downlink first unacknowledged SDU of the PDCP. This table is based on an SN status transfer message in the 3GPP protocol specification TS36.323 v14.0.1. Underlined content is newly added content in this embodiment of this application, to be specific, content corresponding to a row of "Transmit Status Of DL PDCP SDUs". A transmit status of downlink PDCP SDUs field includes the information about the FUS. It can be learned from Table 1 that for each E-UTRAN radio access bearer (E-UTRAN radio access bearer, E-RAB), there is one transmit status of downlink PDCP SDUs field, and E-RABs are in a one-to-one correspondence with DRBs.

**Table 1 SN status transfer message including information about the downlink first unacknowledged SDU of a PDCP**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | ignore |
| Old eNB UE X2AP ID | M | | eNB UE X2AP ID 9.2.24 | Allocated for handover at the source eNB and for dual connectivity at the eNB from which the E-RAB context is transferred | YES | reject |
| New eNB UE X2AP ID | M | | eNB UE X2AP ID 9.2.24 | Allocated for handover at the target eNB and for dual connectivity at the eNB to which the E-RAB context is transferred | YES | reject |
| **E-RABs Subject To Status Transfer List** | | *1* | | | YES | ignore |
| **>E-RABs Subject** | | *1* .. | | | EACH | ignore |
| **To Status Transfer Item** | | *<maxnoof Bearers>* | | | | |
| >>E-RAB ID | M | | 9.2.23 | | - | - |
| >>Receive Status Of UL PDCP SDUs | O | | BIT STRING (4096) | PDCP Sequence Number = (First Missing SDU Number + bit position) modulo 4096 0: PDCP SDU has not been received. 1: PDCP SDU has been received correctly. | - | - |
| >>Transmit Status Of DL PDCP SDUs | O | | BIT STRING (4096) | PDCP Sequence Number = (First Unacknowledged SDU Number) modulo 4096 | | |
| >>UL COUNT Value | M | | COUNT Value 9.2.15 | PDCP-SN and Hyper Frame Number of the first missing UL SDU in case of 12 bit long PDCP-SN | - | - |
| >>DL COUNT Value | M | | COUNT Value 9.2.15 | PDCP-SN and Hyper frame number that the target eNB should assign for the next DL SDU not having an SN yet in case of 12 bit long PDCP-SN | - | - |
| >>Receive Status Of UL PDCP SDUs Extended | O | | BIT STRING (1..16384) | The IE is used in case of 15 bit long PDCP-SN in this release. The first bit indicates the status of the SDU after the First Missing UL PDCP SDU. The Nth bit indicates the status of the UL PDCP SDU in position (N + First Missing SDU Number) modulo (1 + the maximum value of the PDCP-SN). 0: PDCP SDU has not been received. 1: PDCP SDU has been received correctly. | YES | ignore |
| >>UL COUNT Value Extended | O | | COUNT Value Extended 9.2.66 | PDCP-SN and Hyper Frame Number of the first missing UL SDU in case of 15 bit long PDCP-SN | YES | ignore |
| >>DL COUNT Value Extended | O | | COUNT Value Extended 9.2.66 | PDCP-SN and Hyper Frame Number that the target eNB should assign for the next DL SDU not having an SN yet in case of 15 bit long PDCP-SN | YES | ignore |
| >>Receive Status Of UL PDCP SDUs for PDCP SN Length 18 | O | | BIT STRING (1..131072) | The IE is used in case of 18 bit long PDCP-SN. The first bit indicates the status of the SDU after the First Missing UL PDCP SDU. The Nth bit indicates the status of the UL PDCP SDU in position (N + First Missing SDU Number) modulo (1 + the maximum value of the PDCP-SN). 0: PDCP SDU has not been received. 1: PDCP SDU has been received correctly. | YES | ignore |
| >>UL COUNT Value for PDCP SN Length 18 | O | | COUNT Value for PDCP SN Length 18 9.2.82 | PDCP-SN and Hyper Frame Number of the first missing UL SDU in case of 18 bit long PDCP-SN | YES | ignore |
| >>DL COUNT Value for PDCP SN Length 18 | O | | COUNT Value for PDCP SN Length 18 9.2.82 | PDCP-SN and Hyper Frame Number that the target eNB should assign for the next DL SDU not having an SN yet in case of 18 bit long PDCP-SN | YES | ignore |
| Old eNB UE X2AP | O | | Extended eNB UE | Allocated for handover at the source | YES | reject |
| ID Extension | | | X2AP ID 9.2.86 | eNB and for dual connectivity at the eNB from which the E-RAB context is transferred. | | |
| New eNB UE X2AP ID Extension | O | | Extended eNB UE X2AP ID 9.2.86 | Allocated for handover at the target eNB and for dual connectivity at the eNB to which the E-RAB context is transferred. | YES | reject |

203. The terminal device completes the handover, to access the target base station.

In this embodiment of this application, after receiving the message sent by the source base station for instructing the handover, the terminal device is detached (detach) from the source base station, and then synchronizes with the target base station and accesses the target base station in a random access process, to complete the handover.

204. The target base station retransmits, to the terminal device, the downlink PDCP SDUs of the at least one source DRB that are numbered from the SN indicated by the information about the at least one downlink first unacknowledged SDU of the PDCP and that are not correctly received by the terminal device in sequence.

In this embodiment of this application, if the target base station does not receive, from the source base station by using step 205, the second message including the information about the at least one downlink first unacknowledged SDU of the PDCP, the SN indicated by the information about the at least one downlink first unacknowledged SDU of the PDCP corresponds to an SN of the first one of the downlink PDCP SDUs of the at least one source DRB that are not correctly received by the terminal device in sequence and that are received by the target base station from the source base station. For a source DRB, the target base station retransmits, to the terminal device by using a target DRB corresponding to the source DRB, subsequent downlink PDCP SDUs that are numbered from an SN indicated by information about the FUS and end with a downlink last PDCP SDU. The last downlink PDCP SDU is the last one of the PDCP SDUs that are forwarded by the source base station to the target base station during the handover and that are not correctly received by the terminal device in sequence. It should be understood that source DRBs are in a one-to-one correspondence with target DRBs. In an example, for downlink PDCP SDUs of a source DRB, the target base station continues to retransmit, by using one target DRB, the PDCP SDUs of the source DRB in a sequence of SNs of the source DRB. This is applicable to a case in which the source DRB forwards, to the target base station in step 202, both the downlink PDCP SDUs that are not correctly received by the terminal device in sequence and the SNs allocated by the source base station to the downlink PDCP SDUs. In another example, for PDCP SDUs of a source DRB, the target base station numbers the PDCP SDUs by using SNs, and retransmits, starting from an SN of 0, the PDCP SDUs of the source DRB by using one target DRB. This is applicable to a scenario of SN reconfiguration and full configuration, is also applicable to a case in which the source DRB forwards, to the target base station in step 202, the downlink PDCP SDUs that are not correctly received by the terminal device in sequence and that do not carry the SNs allocated by the source base station to the downlink PDCP SDUs, and is further applicable to a case in which the source DRB forwards, to the target base station in step 202, the downlink PDCP SDUs that are not correctly received by the terminal device in sequence and the SNs allocated by the source base station to the downlink PDCP SDUs, and the target base station numbers the received downlink PDCP SDUs by using the SNs.

Optionally, before step 201, the method further includes step 206 and step 207.

206. The terminal device moves, so that the source base station learns that the terminal device is to be handed over.

In this embodiment of this application, the source base station instructs the terminal device to report, in a moving process, measurement of the terminal device for reference signal strength of a neighboring cell base station, learns, based on the measurement report, that the terminal device is to be handed over, and may determine, based on reference signal strength of different neighboring cell base stations, the target base station to which the terminal device is to be handed over.

207. The source base station and the target base station perform handover preparation.

In this embodiment of this application, the source base station may send a handover request to the target base station, to notify the target base station of information about the terminal device that needs to be handed over, information about one or more source DRBs for communication of the terminal device, and the like. The target base station performs admission control based on load of the target base station and the like, and sends, to the source base station by using a handover request response, information such as a DRB that the terminal device is allowed to access, to complete the handover preparation between the source base station and the target base station.

According to the foregoing steps in this embodiment of this application, the downlink PDCP SDUs that are not correctly received by the terminal device in sequence before the handover are re-received by the terminal device after the terminal device is handed over to the target base station, so that lossless handover of the terminal device is implemented.

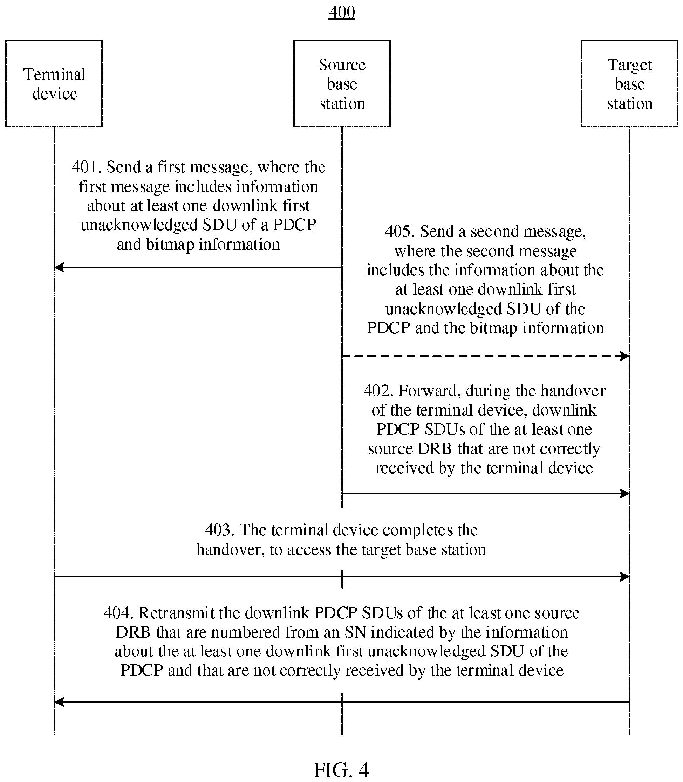

FIG. 4 is a schematic flowchart of another handover control method according to an embodiment of this application. The method 400 may be applied to the communication scenario shown in FIG. 1. The procedure described in FIG. 4 is applied when a terminal device moves and is handed over from a cell controlled by a source base station to a cell controlled by a target base station, and corresponds to SN reconfiguration, full configuration, and a case in which a quantity of destination DRBs is greater than or equal to a quantity of source DRBs. The procedure includes the following steps.

401. The source base station sends a first message to the terminal device, where the first message includes information about at least one downlink first unacknowledged SDU of a PDCP and bitmap information.

In this embodiment of this application, the source base station sends the first message to the terminal device, and the first message is used to instruct the terminal device to be handed over to the target base station. Compared with the first message in step 201 in the foregoing embodiment, for a source DRB, the first message further includes the bitmap information, and the bitmap information is used to indicate a status of receiving, by the terminal device before the handover, subsequent PDCP SDUs starting from the FUS of the source DRB.

For a source DRB, information about the FUS indicates an SN of the first downlink PDCP SDU that is not correctly received by the terminal device. For downlink PDCP SDUs numbered after the SN, the terminal device may correctly receive one or more PDCP SDUs out of sequence. The bitmap information is used to indicate a status of receiving, by the terminal device, downlink PDCP SDUs that are numbered after the SN indicated by the information about the FUS. For example, a bit whose value is "0" in the bitmap indicates that the terminal device cannot correctly receive, out of sequence, a downlink PDCP SDU that corresponds to an SN corresponding to the bit and that is after the FMS. A bit whose value is "1" in the bitmap indicates that the terminal device already correctly receives, out of sequence, a downlink PDCP SDU that corresponds to an SN corresponding to the bit and that is after the FMS.

Optionally, the source base station may not add the information about the at least one downlink first unacknowledged SDU of the PDCP and the bitmap information to the first message to send the information about the at least one downlink first unacknowledged SDU of the PDCP and the bitmap information to the terminal device. In this case, for a source DRB, a PDCP entity of the source base station sends a third message to the terminal device. The third message includes the information about the at least one downlink first unacknowledged SDU of the PDCP and the bitmap information. The third message is used to indicate a transmit status of downlink PDCP SDUs of at least one source DRB of the source base station. A sequence of sending the first message and the third message is not limited in this specification.

The source base station sends the bitmap information to the terminal device, so that the terminal device reduces, when accessing the target base station after the handover, PDCP SDUs retransmitted by the target base station to the terminal device. For example, for a downlink PDCP SDU corresponding to an SN corresponding to a bit whose value is 1 in the bitmap, the target base station does not need to retransmit the downlink PDCP SDU to the terminal device after the handover of the terminal device.

402. The source base station forwards, to the target base station during the handover of the terminal device, downlink PDCP SDUs of the at least one source DRB that are not correctly received by the terminal device.

The step is similar to step 202 in the foregoing embodiment. A main difference lies in that for a source DRB, the source base station forwards only a downlink PDCP SDU that is not correctly received by the terminal device. The source base station does not need to forward, to the target base station, a downlink PDCP SDU that is correctly received by the terminal device out of sequence, so that system resources are saved and air interface overheads are reduced.

Optionally, for a source DRB, the source base station forwards, to the target base station, downlink PDCP SDUs of the at least one source DRB that are not correctly received by the terminal device in sequence.

Optionally, before step 402, the method further includes step 405.

405. The source base station sends a second message to the target base station, where the second message includes the information about the at least one downlink first unacknowledged SDU of the PDCP and the bitmap information.

In this embodiment of this application, after instructing the terminal device to be handed over, the source base station sends the second message to the target base station. Compared with the second message in step 205 in the foregoing embodiment, for a source DRB, the second message further includes the bitmap information, and the bitmap information is used to indicate a status of receiving, by the terminal device before the handover, subsequent downlink PDCP SDUs starting from the FUS. The source base station sends the bitmap information to the target base station, so that the target base station learns of PDCP SDUs that have been correctly received by the terminal device out of sequence before the handover, and does not need to retransmit the PDCP SDUs to the terminal device, so that system resources are saved and air interface overheads are reduced.

For example, the second message may be an SN status transfer message. Table 2 shows the SN status transfer message including the downlink first unacknowledged SDU of the PDCP and a transmit status of downlink PDCP SDUs that is based on the bitmap information. A main difference between content of the transmit status of the downlink PDCP SDUs in Table 1 and Table 2 lies in that a PDCP sequence number in Table 2 includes an SN of the FUS and a bitmap of one or more bit positions (bit position). That a value of a bit position is 0 indicates that a downlink PDCP SDU corresponding to the bit position is not correctly received by the terminal device. That a value of a bit position is 1 indicates that a PDCP SDU corresponding to the bit position is correctly received by the terminal device.

**Table 2 SN status transfer message including an FUS and a transmit status of downlink PDCP SDUs that is based on bitmap information**

| **IE/Group Name** | **Presence** | **Range** | **IE type and reference** | **Semantics description** | **Criticality** | **Assigned Criticality** |
|---|---|---|---|---|---|---|
| >>Transmit Status Of DL PDCP SDUs | O | | BIT STRING (4096) | PDCP Sequence Number = (First Unacknowledged SDU Number + bit position) modulo 4096 0: PDCP SDU has not been acknowledged. 1: PDCP SDU has been acknowledged. | | |

403. The terminal device completes the handover, to access the target base station.

The step is similar to step 203 in the foregoing embodiment. Details are not described herein again.

404. The target base station retransmits, to the terminal device, the downlink PDCP SDUs of the at least one source DRB that are numbered from the SN indicated by the information about the at least one downlink first unacknowledged SDU of the PDCP and that are not correctly received by the terminal device.

The step is similar to step 204 in the foregoing embodiment. A main difference lies in that for a source DRB, the target base station retransmits, to the terminal device by using a target DRB corresponding to the source DRB, subsequent downlink PDCP SDUs that are numbered from an SN indicated by the information about the FUS and end with the last downlink PDCP SDU and that are not correctly received by the terminal device. The target base station does not need to retransmit, to the terminal device, a downlink PDCP SDU correctly received by the terminal device out of sequence, so that system resources are saved and air interface overheads are reduced.

Similarly, in this embodiment of this application, before step 401, the procedure may further include steps such as learning, by the source base station from moving of the terminal device, that the terminal device is to be handed over, and performing, by the source base station and the target base station, handover preparation.

According to the foregoing steps in this embodiment of this application, the downlink PDCP SDUs that are not correctly received by the terminal device before the handover are re-received by the terminal device after the terminal device is handed over to the target base station, so that lossless handover of the terminal device is implemented. In addition, the target base station does not need to retransmit the downlink PDCP SDU correctly received by the terminal device out of sequence before the handover, so that system resources are saved, and air interface overheads are reduced.

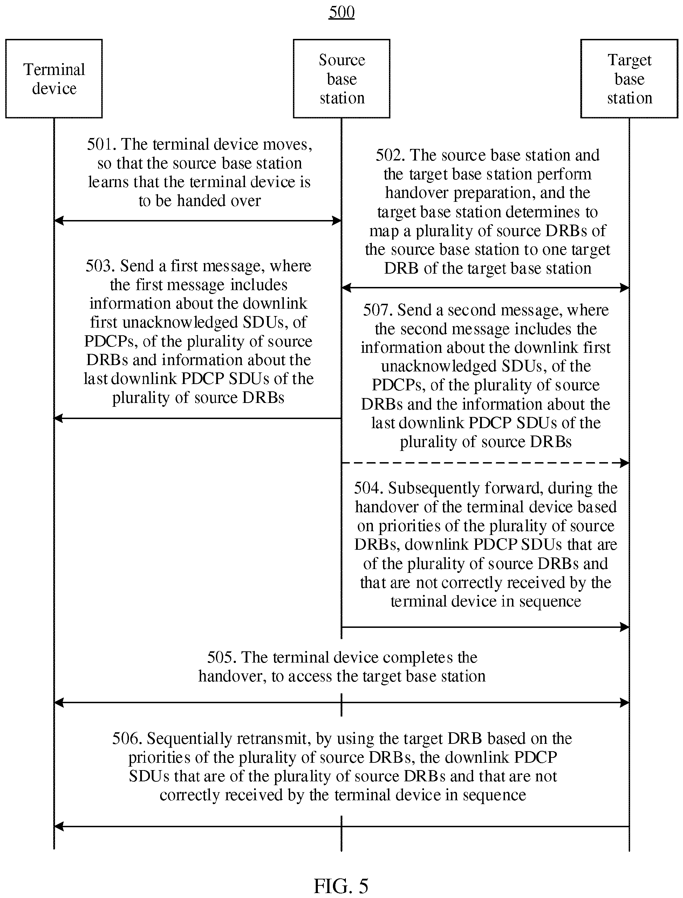

FIG. 5 is a schematic flowchart of still another handover control method according to an embodiment of this application. The method 500 may be applied to the communication scenario shown in FIG. 1. The procedure described in FIG. 5 is applied when a terminal device moves and is handed over from a cell controlled by a source base station to a cell controlled by a target base station, and corresponds to a case in which a quantity of destination DRBs is less than a quantity of source DRBs. The procedure includes the following steps.

501. The terminal device moves, so that the source base station learns that the terminal device is to be handed over.

The step is similar to step 205 in the foregoing embodiment. Details are not described herein again.

502. The source base station and the target base station perform handover preparation, and the target base station determines to remap a plurality of source DRBs of the source base station to one target DRB of the target base station.

During the handover preparation in this embodiment of this application, the target base station admits a plurality of QoS flows corresponding to a plurality of DRBs for communication between the terminal device and the source base station. The DRBs for communication between the terminal device and the source base station are also referred to as source DRBs. The target base station determines to remap (remap) the plurality of source DRBs to one DRB for communication between the terminal device and the target base station. The DRB for communication between the terminal device and the target base station is also referred to as a target DRB. It should be understood that a QoS attribute of one target DRB for communication between the terminal device and the target base station may be the same as or different from a QoS attribute of any one of the plurality of source DRBs for communication between the terminal device and the source base station. For example, remapping is remapping the plurality of QoS flows corresponding to the plurality of source DRBs to one target DRB. This may be described as follows: DRB remapping when a quantity of source DRBs is greater than a quantity of target DRBs is needed in some scenarios. For example, the source base station supports both a massive machine type communications service and a mobile broadband service. Therefore, when the terminal device simultaneously performs the massive machine type communications service and the mobile broadband service, the source base station may use two DRBs to separately provide corresponding services for the terminal device. When the terminal device moves and needs to be handed over to the target base station, and the target base station supports only the mobile broadband service, the target base station needs to remap the massive machine type communications service and the mobile broadband service on the two DRBs for communication between the terminal device and the source base station to a DRB of the mobile broadband service supported by the target base station.

During the handover preparation, the target base station sends priorities of the plurality of source DRBs to the source base station, to instruct the source base station to sequentially forward, to the target base station based on the priorities, downlink PDCP SDUs that are of the plurality of source DRBs and that are not correctly received by the terminal device in sequence. Optionally, the target base station may add the priorities of the plurality of source DRBs to a handover request acknowledgment message sent to the source base station. In a manner, the target base station may notify, in the handover request acknowledgment message in a priority sequence, the source base station of one or more source DRBs admitted by the target base station. In another manner, the target base station may notify, in the handover request acknowledgment message, the source base station of one or more source DRBs admitted by the target base station and a priority of each source DRB.

503. The source base station sends a first message to the terminal device, where the first message includes information about downlink first unacknowledged SDUs, of PDCPs, of the plurality of source DRBs and information about the last downlink PDCP SDUs of the plurality of source DRBs.

In this embodiment of this application, the source base station sends the first message to the terminal device, to instruct the terminal device to be handed over to the target base station. The first message includes the information about the downlink first unacknowledged SDUs, of the PDCPs, of the plurality of source DRBs, and the information is used to indicate an SN of a downlink PDCP SDU that is the first one of SDUs that are of the plurality of source DRBs and that are not correctly received by the terminal device before the handover. In addition, the source base station further adds the information about the last downlink PDCP SDUs of the plurality of source DRBs to the first message, and the information is used to indicate an SN of the last downlink PDCP SDU that is not correctly received by the terminal device before the handover. The source base station sequentially adds, to the first message based on the priorities that are of the plurality of source DRBs and that are obtained in step 402, information about the downlink first unacknowledged SDU of a PDCP and information about the last downlink PDCP SDU that correspond to each source DRB.

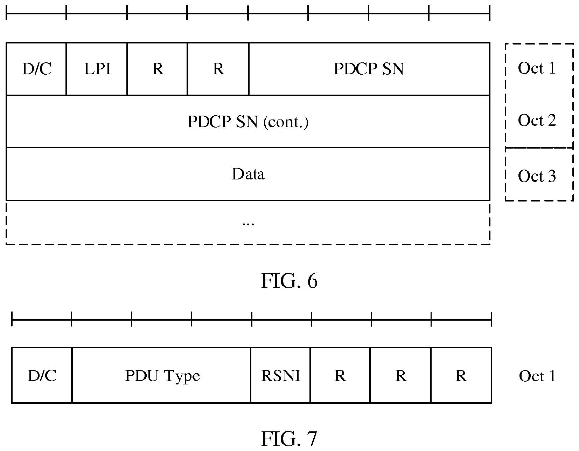

Optionally, the source base station indicates the last downlink PDCP SDU in a data PDU format. As shown in FIG. 6, the data PDU format is as follows: A value of a D/C field is "1", and the second bit in the PDCP SDU is set to be a last packet indicator (last packet indicator, LPI), to indicate whether the PDCP SDU is the last SDU of a PDCP. For example, when a value of the bit is "0", it indicates that the PDCP SDU is not the last SDU of the PDCP; or when a value of the bit is "1", it indicates that the PDCP SDU is the last SDU of the PDCP. Optionally, another reserved bit whose identifier is R may be further used to indicate the LPI.

Optionally, the source base station indicates the last downlink PDCP SDU in a control PDU format. As shown in FIG. 7, the control PDU format is as follows: A value of a D/C field is "0", and the fifth bit in a PDCP SDU is set to be an LPI, to indicate whether the PDCP SDU is the last SDU of a PDCP. For example, when a value of the bit is "0", it indicates that the PDCP SDU is not the last SDU of the PDCP; or when a value of the bit is "1", it indicates that the PDCP SDU is the last SDU of the PDCP. Optionally, another reserved bit whose identifier is R may be further used to indicate the LPI. The source base station may send the control PDU periodically or based on an event trigger. For example, the control PDU is sent after a plurality of downlink PDCP SDUs of a source DRB are determined by the terminal device to be correctly received in sequence. Optionally, the last packet may be further identified by using another identifier such as a reset SN indicator (reset SN indicator, RSNI) to indicate that a PDCP status needs to be reset after the last packet arrives.

It should be understood that the information about the last downlink PDCP SDU may alternatively be represented by using another name or field, provided that the name or field is used to indicate an SN of a downlink PDCP SDU that is the last one of SDUs of one source DRB that are not correctly received by the terminal device before the handover. This is not limited in this specification.

504. The source base station sequentially forwards, to the target base station during the handover of the terminal device based on the priorities of the plurality of source DRBs, the downlink PDCP SDUs that are of the plurality of source DRBs and that are not correctly received by the terminal device in sequence.

The step is similar to step 202 in the foregoing embodiment. A main difference lies in that the source base station sequentially forwards, based on the priorities that are of the plurality of source DRBs and that are learned of during the handover preparation with the target base station, the downlink PDCP SDUs that are of the plurality of source DRBs and that are not correctly received by the terminal device in sequence.

Optionally, before step 504, the method further includes step 507.

507. The source base station sends a second message to the target base station, where the second message includes the information about the downlink first unacknowledged SDUs, of the PDCPs, of the plurality of source DRBs and the information about the last downlink PDCP SDUs of the plurality of source DRBs.

In this embodiment of this application, after instructing the terminal device to be handed over, the source base station sends the second message to the target base station, and the second message is used to indicate an SN of a PDCP SDU forwarded by the source base station to the target base station during the handover of the terminal device. The second message includes the information about the downlink first unacknowledged SDUs, of the PDCPs, of the plurality of source DRBs and the information about the last downlink PDCP SDUs of the plurality of source DRBs. The source base station sequentially adds, to the second message based on the priorities that are of the plurality of source DRBs and that are obtained in step 502, the information about the downlink first unacknowledged SDU of the PDCP and the information about the last downlink PDCP SDU that correspond to each source DRB.

505. The terminal device completes the handover, to access the target base station.

The step is similar to step 203 in the foregoing embodiment. Details are not described herein again.

506. The target base station sequentially retransmits, to the terminal device by using the target DRB based on the priorities of the plurality of source DRBs, the downlink PDCP SDUs that are of the plurality of source DRBs and that are not correctly received by the terminal device in sequence.

In this embodiment of this application, the terminal device accesses the target base station and establishes one target DRB, and the target DRB is used by the terminal device and the target base station to continue communication of a plurality of QoS flows before the handover of the terminal device. The plurality of QoS flows are mapped, before the handover of the terminal device, to the plurality of source DRBs for communication between the terminal device and the source base station.

For a source DRB, downlink PDCP SDUs that are not correctly received by the terminal device in sequence are downlink PDCP SDUs numbered from an SN indicated by information about the downlink first unacknowledged SDU, of a PDCP, of the source DRB to an SN indicated by information about the last downlink PDCP SDU of the source DRB. If the target base station does not receive, from the source base station by using step 507, the second message including the information about the downlink first unacknowledged SDU, of the PDCP, of the DRB and the information about the last downlink PDCP SDU of the DRB, the SN indicated by the information about the downlink first unacknowledged SDU, of the PDCP, of the DRB corresponds to an SN of the first one of the downlink PDCP SDUs of the source DRB that are not correctly received by the terminal device in sequence and that are received by the target base station from the source base station, and the SN indicated by the information about the last downlink PDCP SDU of the source DRB corresponds to an SN of the last one of the downlink PDCP SDUs of the source DRB that are not correctly received by the terminal device in sequence and that are received by the target base station from the source base station.

The target base station stores, into respective cache queues, a plurality of PDCP SDUs of the source base station that are forwarded by the source base station, and sequentially retransmits, on the target DRB based on the priorities of the plurality of source DRBs, downlink PDCP SDUs that are of the source DRBs and that are not correctly received by the terminal device in sequence. Specifically, for retransmission of downlink PDCP SDUs of a source DRB, the target base station needs to retransmit subsequent downlink PDCP SDUs of the source DRB that start from a PDCP SDU indicated by information about the FUS and end with the last PDCP SDU of the DRB. In an example, for downlink PDCP SDUs of a source DRB, the target base station retransmits the PDCP SDUs of the source DRB by using the target DRB still in a sequence of SNs of the source DRB. This is applicable to a case in which the source DRB forwards, to the target base station in step 504, both the downlink PDCP SDUs that are not correctly received by the terminal device in sequence and the SNs allocated by the source base station to the downlink PDCP SDUs. In another example, for PDCP SDUs of a source DRB, the target base station numbers the PDCP SDUs by using SNs, and retransmits, starting from an SN of 0, the PDCP SDUs of the source DRB by using the target DRB. This is applicable to a case in which the source DRB forwards, to the target base station in step 504, the downlink PDCP SDUs that are not correctly received by the terminal device in sequence and that do not carry the SNs allocated by the source base station to the downlink PDCP SDUs, and is further applicable to a case in which the source DRB forwards, to the target base station in step 504, the downlink PDCP SDUs that are not correctly received by the terminal device in sequence and the SNs allocated by the source base station to the downlink PDCP SDUs, and the target base station numbers the received downlink PDCP SDUs by using the SNs. It should be noted that after retransmitting downlink PDCP SDUs of a source DRB on the target DRB, the target base station needs to reset a PDCP status of the target DRB, to retransmit downlink PDCP SDUs of a next source DRB. Therefore, the target base station learns, based on the information that is about the last downlink PDCP SDUs of the plurality of source DRBs and that is obtained in step 504, of the last PDCP SDU that the target base station needs to retransmit for a source DRB, and resets the PDCP status of the target DRB after retransmitting the last downlink PDCP SDU.

Correspondingly, the terminal device sequentially receives, by using the target DRB based on the information about the downlink first unacknowledged SDUs, of the PDCPs, of the plurality of source DRBs and the information about the last downlink PDCP SDUs of the plurality of source DRBs that are obtained in step 503, downlink PDCP SDUs of each source DRB that are retransmitted by the target base station, and stores the downlink PDCP SDUs into a respective cache queue. After correctly receiving downlink PDCP SDUs of a source DRB that are retransmitted by the target base station, the terminal device resets the PDCP status of the target DRB, and starts to receive downlink PDCP SDUs of a next source DRB that are retransmitted by the target base station.

According to the foregoing steps in this embodiment of this application, in a scenario of mapping a plurality of source DRBs to one target DRB, the downlink PDCP SDUs that are not correctly received by the terminal device before the handover are re-received by the terminal device after the terminal device is handed over to the target base station, so that lossless handover of the terminal device is implemented.

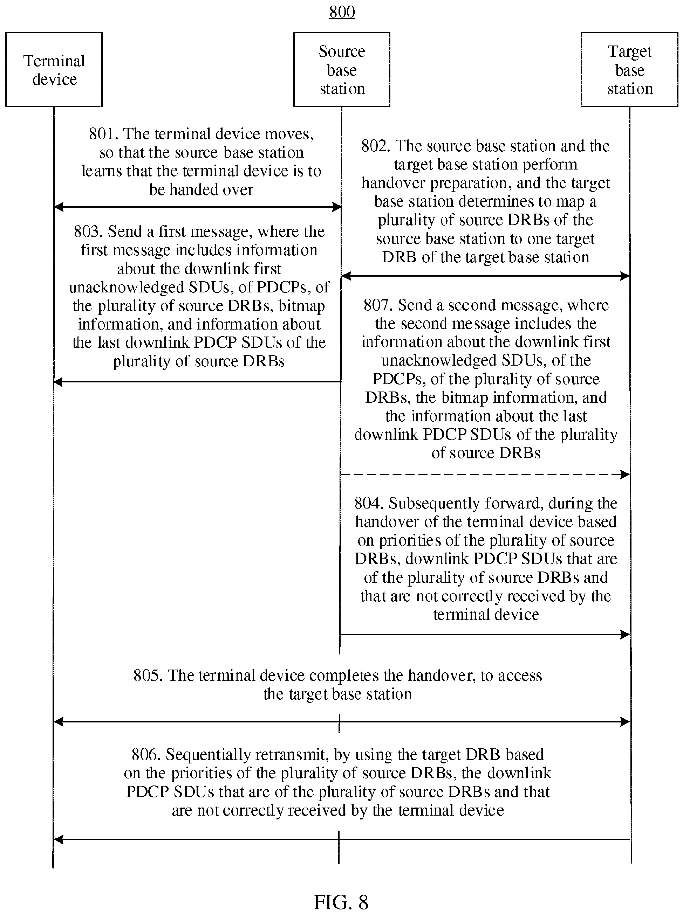

FIG. 8 is a schematic flowchart of yet another handover control method according to an embodiment of this application. The method 800 may be applied to the communication scenario shown in FIG. 1. The procedure described in FIG. 5 is applied when a terminal device moves and is handed over from a cell controlled by a source base station to a cell controlled by a target base station, and corresponds to a case in which a quantity of destination DRBs is less than a quantity of source DRBs. The procedure includes the following steps.

801. The terminal device moves, so that the source base station learns that the terminal device is to be handed over.

802. The source base station and the target base station perform handover preparation, and the target base station determines to map a plurality of source DRBs of the source base station to one target DRB of the target base station.

Steps 801 and 802 are similar to steps 501 and 502 in the foregoing embodiment. Details are not described herein again.

803. The source base station sends a first message to the terminal device, where the first message includes information about the downlink first unacknowledged SDUs, of PDCPs, of the plurality of source DRBs, bitmap information of the plurality of source DRBs, and information about the last downlink PDCP SDUs of the plurality of source DRBs.

The step is similar to step 503 in the foregoing embodiment. A main difference lies in that the source base station further adds, to the first message, the bitmap information of the downlink PDCP SDUs of the plurality of source DRBs.

804. The source base station sequentially forwards, to the target base station during the handover of the terminal device based on priorities of the plurality of source DRBs, downlink PDCP SDUs that are of the plurality of source DRBs and that are not correctly received by the terminal device.

The step is similar to step 402 in the foregoing embodiment. A main difference lies in that the source base station sequentially forwards, based on the priorities that are of the plurality of source DRBs and that are learned of during the handover preparation with the target base station, the downlink PDCP SDUs of the plurality of source DRBs.

Optionally, before step 804, the method further includes step 807.

807. The source base station sends a second message to the target base station, where the second message includes the information about the downlink first unacknowledged SDUs, of the PDCPs, of the plurality of source DRBs, the bitmap information of the plurality of source DRBs, and the information about the last downlink PDCP SDUs of the plurality of source DRBs.

The step is similar to step 507 in the foregoing embodiment. A main difference lies in that the source base station further adds, to the second message, the bitmap information of the downlink PDCP SDUs of the plurality of source DRBs.

805. The terminal device completes the handover, to access the target base station.

The step is similar to step 203 in the foregoing embodiment. Details are not described herein again.

806. The target base station sequentially retransmits, to the terminal device by using the target DRB based on the priorities of the plurality of source DRBs, the downlink PDCP SDUs that are of the plurality of source DRBs and that are not correctly received by the terminal device.

The step is similar to step 506 in the foregoing embodiment. A main difference lies in that for a source DRB, the target base station retransmits, to the terminal device by using a target DRB corresponding to the source DRB, subsequent downlink PDCP SDUs that are numbered from an SN indicated by information about the FUS and end with the last downlink PDCP SDU and that are not correctly received by the terminal device. The target base station does not need to retransmit, to the terminal device, a downlink PDCP SDU correctly received by the terminal device out of sequence, so that system resources are saved and air interface overheads are reduced.

According to the foregoing steps in this embodiment of this application, in a scenario of mapping a plurality of source DRBs to one target DRB, the downlink PDCP SDUs that are not correctly received by the terminal device before the handover are re-received by the terminal device after the terminal device is handed over to the target base station, so that lossless handover of the terminal device is implemented. In addition, the target base station does not need to retransmit the downlink PDCP SDU correctly received by the terminal device out of sequence before the handover, so that system resources are saved, and air interface overheads are reduced.

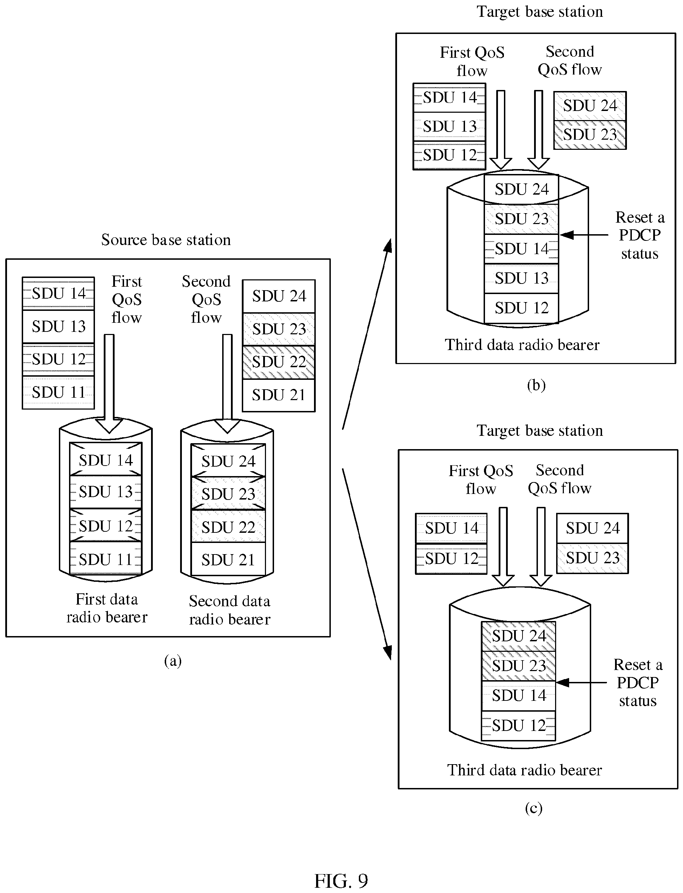

The following describes, by using a specific example, a data transmission process when the plurality of source DRBs for communication between the terminal device and the source base station before the handover are remapped to one destination DRB for communication between the terminal device and the target base station after the handover. Referring to FIG. 9(a), before the handover, the terminal device communicates with the source base station by simultaneously using two QoS flows. A first QoS flow is mapped to a first DRB on the source base station, and a second QoS flow is mapped to a second DRB. Before sending, to the terminal device, a message for instructing the handover, the source base station sends an SDU 11 to an SDU 14 of a first PDCP for the first DRB. The SDU 11 and the SDU 13 are correctly received by the terminal device. The SDU 11 is correctly received in sequence. The terminal device does not correctly receive the SDU 12 but correctly receives the SDU 13. Therefore, the SDU 13 is correctly received out of sequence. For the second DRB, the source base station sends an SDU 21 to an SDU 24 of a second PDCP. The SDU 21 and the SDU 22 are correctly received by the terminal device in sequence. When the terminal device moves, and the source base station learns that the terminal device is to be handed over, the source base station first performs handover preparation with the target base station. During the handover preparation, the target base station admits the two established QoS flows of the terminal device, and determines to remap the two DRBs for communication between the terminal device and the source base station to one DRB, namely, a third DRB. The target base station adds, to a handover request acknowledgment message sent to the source base station, priorities of the two DRBs of the source base station, to be specific, instructs the source base station to sequentially forward, to the target base station based on the priorities, PDCP SDUs that are of the two DRBs and that are not correctly received by the terminal device in sequence. In the example, it is assumed that a priority of the first DRB is higher than that of the second DRB.

Then, the source base station sends, to the terminal device, the message for instructing the handover, to instruct the terminal device to be handed over to the target base station. The message sent by the source base station to the terminal device for instructing the handover includes a transmit status of SDUs of the first PDCP corresponding to the first DRB and the second PDCP corresponding to the second DRB. In addition, the source base station sends, to the target base station, a message used to indicate a status of receiving and transmitting, by the source base station, PDCP SDUs. The message also includes the transmit status of the SDUs of the first PDCP and the second PDCP. Specifically, the messages respectively sent by the source base station to the terminal device and the target base station include that the FUS of the first PDCP is 2 and the FUS of the second PDCP is 3. In the example, for the first PDCP, the source base station may indicate in the SDU 14 that the SDU 14 is the last SDU of the first PDCP. For the second PDCP, the source base station indicates in the SDU 24 that the SDU 24 is the last SDU of the second PDCP. The source base station adds, in a priority sequence, information about the FUS of each PDCP to the message for instructing the handover. The priority of the first DRB is higher than that of the second DRB. Therefore, the source base station sequentially adds information about the FUS of the first PDCP and information about the FUS of the second PDCP to the message for instructing the handover. The source base station adds, in the priority sequence, the information about the FUS of each PDCP to the message that indicates the status of transmitting, by the source base station, the downlink PDCP SDUs before the handover of the terminal device. During the handover, the terminal device separately stores, into respective cache queues based on the information about the FUS of the first PDCP and the information about the FUS of the second PDCP that are sent by the source base station, the PDCP SDU of the first PDCP that is correctly received in sequence, the PDCP SDUs of the second PDCP that are correctly received in sequence, and respective information about the FUS, and discards the PDCP SDU correctly received out of sequence. During the handover, the source base station forwards, to the target base station, SDUs of the first PDCP and the second PDCP that are not correctly received by the terminal device in sequence before the source base station sends the message for instructing the handover to the terminal device. Specifically, for the first PDCP, the source base station forwards, to the target base station, the SDU 12 to the SDU 14 that are not correctly received by the terminal device in sequence. For the second PDCP, the source base station forwards the SDU 23 and the SDU 24 to the target base station. The source base station separately forwards the SDUs of the PDCPs in the priority sequence.

Referring to FIG. 9(b), the target base station respectively stores, into respective cache queues, the SDUs that are of the first PDCP and the second PDCP and that are forwarded by the source base station. After the terminal device is handed over and accesses the target base station, the target base station retransmits, to the terminal device in the priority sequence, the downlink SDUs that are of the two PDCPs and that are forwarded by the source base station. The target base station first retransmits, on the third DRB to the terminal device, the SDU 12 to the SDU 14 that are forwarded by the source base station, and resets (reset) a PDCP entity of the third DRB after the terminal device determines that the SDU 12 to the SDU 14 are correctly received. Then, the target base station retransmits, on the third DRB to the terminal device, the SDU 23 and the SDU 24 that are forwarded by the source base station, and waits for the terminal device to determine that the SDU 23 and the SDU 24 are correctly received. Correspondingly, the terminal device first receives the SDU 12 to the SDU 14 on the third DRB established between the terminal device and the target base station, and sequentially stores the correctly received SDU 12 to SDU 14 into the cache queue of the first PDCP. When receiving the SDU 14, the terminal device learns that the SDU 14 is the last SDU of the first PDCP. Therefore, after correctly receiving the SDU 14, the terminal device receives the SDU 23 and the SDU 24 on the third DRB, and sequentially stores the correctly received SDU 23 and SDU 24 into the cache queue of the second PDCP, until the SDU 24 is correctly received. After the SDUs, of the first PDCP and the second PDCP, of the source base station, are correctly transmitted between the target base station and the terminal device, the target base station and the terminal device reset the PDCP entity of the third DRB, and start to transmit data of a third PDCP.

Optionally, the source base station adds a bitmap field to the information about the FUS that is sent to the terminal device, to indicate a status of transmitting, by the source base station, subsequent PDCP SDUs starting from the FUS. For the example described in FIG. 9(a), the messages respectively sent by the source base station to the terminal device and the target base station include that the FUS of the first PDCP is 2 and a bitmap whose value is "10", and that the FUS of the second PDCP is 3 and a bitmap whose value is "0". The value of the bitmap of the first PDCP indicates that the terminal device correctly receives the SDU 13 out of sequence after the SDU 12. The value of the bitmap of the second PDCP indicates that the terminal device does not correctly receive other SDUs out of sequence after the SDU 23. The source base station adds, in the priority sequence, the information about the FUS of each PDCP and bitmap information of each PDCP to the message for instructing the handover. The source base station adds, in the priority sequence, the information about the FUS of each PDCP and the bitmap information of each PDCP to the message that indicates the status of transmitting, by the source base station, the downlink PDCP SDUs before the handover of the terminal device. During the handover, the terminal device respectively stores, into respective cache queues based on the information about the FUSs and the bitmap information that are of the first PDCP and the second PDCP and that are sent by the source base station, the correctly received PDCP SDU of the first PDCP, the correctly received PDCP SDUs of the second PDCP, and respective information about the FUS. During the handover, the source base station forwards, to the target base station, SDUs of the first PDCP and the second PDCP that are not correctly received by the terminal device before the source base station sends the message for instructing the handover to the terminal device. Specifically, for the first PDCP, the source base station forwards, to the target base station, the SDU 12 and the SDU 14 that are not correctly received by the terminal device. For the second PDCP, the source base station forwards the SDU 23 and SDU 24 to the target base station. The source base station forwards the SDUs of the PDCPs in the priority sequence.

Referring to FIG. 9(c), the target base station respectively stores, into respective cache queues, the SDUs of the first PDCP and the second PDCP that are forwarded by the source base station. After the terminal device is handed over and accesses the target base station, the target base station retransmits, to the terminal device in the priority sequence, the downlink SDUs that are of the two PDCPs and that are forwarded by the source base station. The target base station first retransmits, on the third DRB to the terminal device, the SDU 12 and the SDU 14 that are forwarded by the source base station, and resets (reset) the PDCP entity of the third DRB after the terminal device determines that the SDU 12 and the SDU 14 are correctly received. Then, the target base station retransmits, on the third DRB to the terminal device, the SDU 23 and the SDU 24 that are forwarded by the source base station, and waits for the terminal device to determine that the SDU 23 and the SDU 24 are correctly received. Correspondingly, the terminal device first receives the SDU 12 and the SDU 14 on the third DRB established between the terminal device and the target base station, and sequentially stores the correctly received SDU 12 and the SDU 14 into the cache queue of the first PDCP. When receiving the SDU 14, the terminal device learns that the SDU 14 is the last SDU of the first PDCP. Therefore, after correctly receiving the SDU 14, the terminal device receives the SDU 23 and the SDU 24 on the third DRB, and sequentially stores the correctly received SDU 23 and SDU 24 into the cache queue of the second PDCP, until the SDU 24 is correctly received. After the SDUs, of the first PDCP and the second PDCP, of the source base station, are correctly transmitted between the target base station and the terminal device, the target base station and the terminal device reset the PDCP entity of the third DRB, and start to transmit data of a third PDCP.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like. A person skilled in the art may use different methods to implement the described functions for each particular application, but it should not be considered that the implementation goes beyond the scope of this patent application.

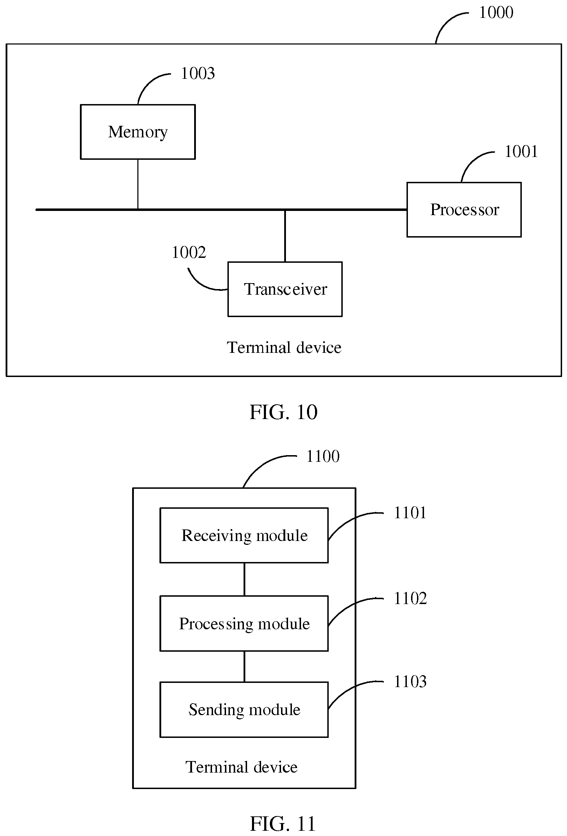

The foregoing describes in detail the method embodiments of this application with reference to FIG. 3 to FIG. 9. The following describes in detail apparatus embodiments of this application with reference to FIG. 10 to FIG. 13. It should be understood that the apparatus embodiments and the method embodiments correspond to each other. For similar descriptions, refer to the method embodiments. It should be noted that the apparatus embodiments may be used in conjunction with the foregoing methods, or may be independently used.

FIG. 10 is a schematic block diagram of a terminal device 1000 according to an embodiment of this application. The terminal device 1000 may correspond to (for example, may be configured in or may be) the terminal device described in the method 200, the terminal device described in the method 400, the terminal device described in the method 500, or the terminal device described in the method 800. The terminal device 1000 may include a processor 1001 and a transceiver 1002. The processor 1001 is in communication connection with the transceiver 1002. Optionally, the terminal device 1000 further includes a memory 1003. The memory 1003 is in communication connection with the processor 1001. Optionally, the processor 1001, the memory 1003, and the transceiver 1002 may be in communication connection with each other. The memory 1003 may be configured to store an instruction. The processor 1001 is configured to execute the instruction stored in the memory 1003, to control the transceiver 1002 to send information or a signal. The processor 1001 and the transceiver 1002 are configured to perform actions or processing processes performed by the terminal device in the method 200, the terminal device in the method 400, the terminal device in the method 500, or the terminal device in the method 800. Herein, to avoid repetition, detailed descriptions are omitted.

FIG. 11 is another schematic block diagram of a terminal device 1100 according to an embodiment of this application. The terminal device 1100 may correspond to (for example, may be configured in or may be) the terminal device described in the method 200, the terminal device described in the method 400, the terminal device described in the method 500, or the terminal device described in the method 800. The terminal device 1100 may include a receiving module 1101, a processing module 1102, and a sending module 1103. The processing module 1102 is in communication connection with the receiving module 1101 and the sending module 1103. Modules or units in the terminal device 1100 are configured to perform actions or processing processes performed by the terminal device in the method 200, the terminal device in the method 400, the terminal device in the method 500, or the terminal device in the method 800. Herein, to avoid repetition, detailed descriptions are omitted.

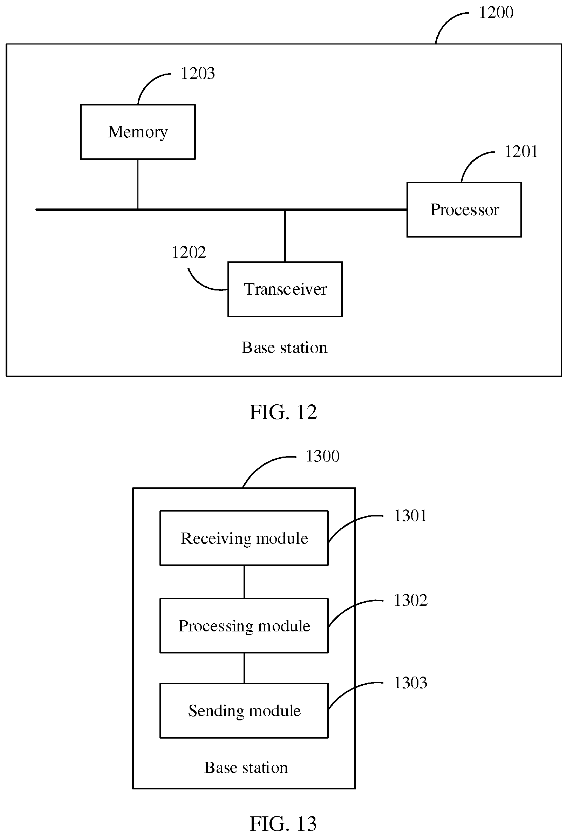

FIG. 12 is a schematic block diagram of a base station 1200 according to an embodiment of this application. The base station 1200 may correspond to (for example, may be configured in or may be) the base station described in the method 200, the base station described in the method 400, the base station described in the method 500, or the base station described in the method 800. The base station 1200 may include a processor 1201 and a transceiver 1202. The processor 1201 is in communication connection with the transceiver 1202. Optionally, the base station 1200 further includes a memory 1203. The memory 1203 is in communication connection with the processor 1201. Optionally, the processor 1201, the memory 1203, and the transceiver 1202 may be in communication connection with each other. The memory 1203 may be configured to store an instruction. The processor 1201 is configured to execute the instruction stored in the memory 1203, to control the transceiver 1202 to send information or a signal. The processor 1201 and the transceiver 1202 are configured to perform actions or processing processes performed by the base station in the method 200, the base station in the method 400, the base station in the method 500, or the base station in the method 800. Herein, to avoid repetition, detailed descriptions are omitted.

FIG. 13 is another schematic block diagram of a base station 1300 according to an embodiment of this application. The base station 1300 may correspond to (for example, may be configured in or may be) the base station described in the method 200, the base station described in the method 400, the base station described in the method 500, or the base station described in the method 800. The base station 1300 may include a receiving module 1301, a processing module 1302, and a sending module 1303. The processing module 1302 is in communication connection with the receiving module 1301 and the sending module 1303. Modules or units in the base station 1300 are configured to perform actions or processing processes performed by the base station in the method 200, the base station in the method 400, the base station in the method 500, or the base station in the method 800. Herein, to avoid repetition, detailed descriptions are omitted.

It should be understood that the processors (1001 and 1201) in the apparatus embodiments of this application may be a central processing unit (Central Processing Unit, CPU for short), a network processor (Network Processor, NP for short), a hardware chip, or any combination thereof. The hardware chip may be an application-specific integrated circuit (Application-Specific Integrated Circuit, ASIC for short), a programmable logic device (Programmable Logic Device, PLD for short), or a combination thereof. The PLD may be a complex programmable logic device (Complex Programmable Logic Device, CPLD for short), a field-programmable logic gate array (Field-Programmable Gate Array, FPGA for short), generic array logic (Generic Array Logic, GAL for short), or any combination thereof.

The memories (1003 and 1203) in the apparatus embodiments of this application may be a volatile memory (Volatile Memory) such as a random-access memory (Random-Access Memory, RAM for short); or may be a nonvolatile memory (Non-Volatile Memory) such as a read-only memory (Read-Only Memory, ROM for short), a flash memory (Flash Memory), a hard disk drive (Hard Disk Drive, HDD for short), or a solid-state drive (Solid-State Drive, SSD for short); or may be a combination of the foregoing types of memories.

In the several embodiments provided in this application, it should be understood that the disclosed apparatuses and methods may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this patent application may be integrated into one processing unit, or each of the units may exist alone physically, or two or more units are integrated into one unit.

When functions are implemented in a form of a software functional unit and sold or used as an independent product, the functions may be stored in a computer-readable storage medium. Based on such an understanding, the technical solutions of this patent application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this patent application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this patent application, but are not intended to limit the protection scope of this patent application. Therefore, the protection scope of this patent application shall be subject to the protection scope of the claims.

## Claims

1. A handover control method, comprising:
receiving (201, 401, 503, 803), by a terminal device, a first message sent by a source base station, wherein the first message comprises information about at least one downlink first unacknowledged service data unit, SDU, of a packet data convergence protocol, PDCP, the first message is used to instruct the terminal device to be handed over to a target base station, and the information about the at least one downlink first unacknowledged SDU of the PDCP is used to indicate a sequence number, SN, of a downlink PDCP SDU that is the first one of SDUs that are of at least one source data radio bearer, DRB, for communication between the terminal device and the source base station before the handover and that are not correctly received by the terminal device;
completing (203, 403, 505, 805), by the terminal device, the handover, to access the target base station; and
receiving (204, 404, 506, 806), by the terminal device, downlink PDCP SDUs of the at least one source DRB that are not correctly received by the terminal device in sequence and that are numbered from the SN indicated by the information about the at least one downlink first unacknowledged SDU of the PDCP, wherein the downlink PDCP SDUs of the at least one source DRB are retransmitted by the target base station;
wherein 7 the first message further comprises information about the last downlink PDCP SDUs of a plurality of source DRBs between the terminal device and the source base station that are remapped during handover preparation to one target DRB for communication between the terminal device and the target base station, and the information is used to indicate SNs of the last downlink PDCP SDUs that are of the plurality of DRBs for communication between the terminal device and the source base station before the handover and that are not correctly received by the terminal device.

2. The method according to claim 1, wherein when a plurality of source DRBs for communication between the terminal device and the source base station are remapped to one target DRB for communication between the terminal device and the target base station, the method comprises:
receiving (506, 806), by the terminal device, downlink PDCP SDUs that are of the plurality of source DRBs, are not correctly received by the terminal device in sequence, and are sequentially retransmitted by the target base station by using the target DRB based on priorities of the plurality of source DRBs.

3. A handover control method, comprising:
sending (201, 401, 503, 803) during handover preparation, by a source base station, a first message to a terminal device, wherein the first message comprises information about at least one downlink first unacknowledged service data unit, SDU, of a packet data convergence protocol, PDCP, the first message is used to instruct the terminal device to be handed over to a target base station; and the information about the at least one downlink first unacknowledged SDU of the PDCP is used to indicate a sequence number, SN, of a downlink PDCP SDU that is the first one of SDUs that are of at least one source data radio bearer, DRB, for communication between the terminal device and the source base station before the handover and that are not correctly received by the terminal device; and
forwarding (202, 402, 504, 804), by the source base station to the target base station during the handover of the terminal device, downlink PDCP SDUs of the at least one source DRB that are not correctly received by the terminal device in sequence;
sending (205, 405, 507, 807), by the source base station, a second message to the target base station, wherein the second message comprises the information about the at least one downlink first unacknowledged SDU of the PDCP, and the second message is used to indicate an SN of a PDCP SDU forwarded by the source base station to the target base station during the handover of the terminal device;
wherein the first message further comprises information about the last downlink PDCP SDUs of a plurality of source DRBs for communication between the terminal device and the source base station, which are remapped during handover preparation to one target DRB for communication between the terminal device and the target base station, and the information is used to indicate SNs of the last downlink PDCP SDUs that are of the plurality of DRBs for communication between the terminal device and the source base station before the handover and that are not correctly received by the terminal device.

4. The method according to claim 3, wherein when a plurality of source DRBs for communication between the terminal device and the source base station are remapped to one target DRB for communication between the terminal device and the target base station, the source base station sequentially forwards (504, 804), to the target base station based on priorities of the plurality of source DRBs during the handover of the terminal device, downlink PDCP SDUs that are of the plurality of source DRBs and that are not correctly received by the terminal device in sequence.

5. The method according to claim 4, wherein when a plurality of source DRBs for communication between the terminal device and the source base station are remapped to one target DRB for communication between the terminal device and the target base station, the second message further comprises information about the last downlink PDCP SDUs of the plurality of source DRBs.

6. A handover control method, comprising:
receiving (202, 402, 504, 804), by a target base station during handover of a terminal device, downlink packet data convergence protocol, PDCP, service data units, SDUs, of at least one source data radio bearer, DRB, that are forwarded by a source base station and that are not correctly received by the terminal device in sequence;
completing (203, 403, 505, 805), by the terminal device, the handover, to access the target base station; and
retransmitting (204, 404, 506, 806), by the target base station to the terminal device, the downlink PDCP SDUs of the at least one source DRB that are not correctly received by the terminal device in sequence and that are numbered from an SN indicated by information about at least one downlink first unacknowledged SDU of a PDCP, and the SN indicated by the information about the at least one downlink first unacknowledged SDU of the PDCP corresponds to an SN of a downlink PDCP SDU that is the first one of the SDUs of the at least one source DRB that are forwarded by the source base station and that are not correctly received by the terminal device in sequence.
receiving (205, 405, 507, 807), by the target base station, a second message sent by the source base station, wherein the second message comprises the information about the at least one downlink first unacknowledged SDU of the PDCP, and the second message is used to indicate an SN of a PDCP SDU forwarded by the source base station to the target base station during the handover of the terminal device;
wherein during handover preparation a plurality of source DRBs for communication between the terminal device and the source base station are remapped by the target base station to one target DRB for communication between the terminal device and the target base station and the second message further comprises information about the last downlink PDCP SDUs of the plurality of source DRBs.

7. The method according to claim 6, wherein when a plurality of source DRBs for communication between the terminal device and the source base station are remapped to one target DRB for communication between the terminal device and the target base station, the target base station receives (504, 804), during the handover of the terminal device, downlink PDCP SDUs that are of the plurality of source DRBs, are not correctly received by the terminal device in sequence, and are sequentially forwarded by the source base station based on priorities of the plurality of source DRBs.

8. The method according to claim 6, wherein when a plurality of source DRBs for communication between the terminal device and the source base station are remapped to one target DRB for communication between the terminal device and the target base station, the method comprises:
sequentially retransmitting (506, 806), by the target base station to the terminal device by using the target DRB based on priorities of the plurality of source DRBs, downlink PDCP SDUs that are of the plurality of source DRBs and that are not correctly received by the terminal device in sequence.

9. A terminal device configured to perform the method of any one of claims 1 to 2.

10. A source base station configured to perform the method of any one of claims 3 to 5.

11. A target base station configured to perform the method of any one of claims 6 to 8.

## Patentansprüche

1. Übergabesteuerungsverfahren, umfassend:
Empfangen (201, 401, 503, 803), durch eine Endgerätvorrichtung, einer durch eine Ausgangsbasisstation gesandten ersten Nachricht, wobei die erste Nachricht Informationen über mindestens eine erste unbestätigte Abwärtsstrecken-Dienstdateneinheit, SDU, eines Paketdaten-Konvergenzprotokolls, PDCP, umfasst, die erste Nachricht verwendet wird, die Endgerätvorrichtung anzuweisen, an eine Zielbasisstation übergeben zu werden, und die Informationen über die mindestens eine erste unbestätigte Abwärtsstrecken-SDU des PDCP verwendet werden, eine Sequenznummer, SN, einer Abwärtsstrecken-PDCP-SDU anzugeben, die die erste eine von SDUs ist, die zu mindestens einem Ausgangsdatenfunkträger, DRB, für Kommunikation zwischen der Endgerätvorrichtung und der Ausgangsbasisstation vor der Übergabe gehören und die durch die Endgerätvorrichtung nicht richtig empfangen werden;
Fertigstellen (203, 403, 505, 805), durch die Endgerätvorrichtung, der Übergabe, um auf die Zielbasisstation zuzugreifen; und
Empfangen (204, 404, 506, 806), durch die Endgerätvorrichtung, von Abwärtsstrecken-PDCP-SDUs des mindestens einen Ausgangs-DRB, die durch die Endgerätvorrichtung nicht richtig empfangen werden, der Reihe nach und die von der SN nummeriert sind, die durch die Informationen über die mindestens eine erste unbestätigte Abwärtsstrecken-SDU des PDCP angegeben werden, wobei die Abwärtsstrecken-PDCP-SDUs des mindestens einen Ausgangs-DRB durch die Zielbasisstation erneut übertragen werden;
wobei die erste Nachricht ferner Informationen über die letzten Abwärtsstrecken-PDCP-SDUs einer Vielzahl von Ausgangs-DRBs zwischen der Endgerätvorrichtung und der Ausgangsbasisstation umfasst, die während der Übergabevorbereitung auf einen Ziel-DRB für Kommunikation zwischen der Endgerätvorrichtung und der Zielbasisstation neu abgebildet werden, und die Informationen verwendet werden, SNs der letzten Abwärtsstrecken-PDCP-SDUs anzugeben, die zu der Vielzahl von DRBs für Kommunikation zwischen der Endgerätvorrichtung und der Ausgangsbasisstation vor der Übergabe gehören und die durch die Endgerätvorrichtung nicht richtig empfangen werden.

2. Verfahren nach Anspruch 1, wobei, wenn eine Vielzahl von Ausgangs-DRBs für Kommunikation zwischen der Endgerätvorrichtung und der Ausgangsbasisstation auf einen Ziel-DRB für Kommunikation zwischen der Endgerätvorrichtung und der Zielbasisstation neu abgebildet wird, das Verfahren umfasst:
Empfangen (506, 806), durch die Endgerätvorrichtung, von Abwärtsstrecken-PDCP-SDUs, die zu der Vielzahl von Ausgangs-DRBs gehören, die durch die Endgerätvorrichtung nicht richtig empfangen werden, der Reihe nach, und der Reihe nach durch die Zielbasisstation unter Verwendung des Ziel-DRB basierend auf Prioritäten der Vielzahl von Ausgangs-DRBs erneut übertragen werden.

3. Übergabesteuerungsverfahren, umfassend:
Senden (201, 401, 503, 803) während der Übergabevorbereitung, durch eine Ausgangsbasisstation, einer ersten Nachricht an eine Endgerätvorrichtung, wobei die erste Nachricht Informationen über mindestens eine erste unbestätigte Abwärtsstrecken-Dienstdateneinheit, SDU, eines Paketdaten-Konvergenzprotokolls, PDCP, umfasst, die erste Nachricht verwendet wird, die Endgerätvorrichtung anzuweisen, an eine Zielbasisstation übergeben zu werden; und die Informationen über die mindestens eine erste unbestätigte Abwärtsstrecken-SDU des PDCP verwendet werden, eine Sequenznummer, SN, einer Abwärtsstrecken-PDCP-SDU anzugeben, die die erste eine von SDUs ist, die zu mindestens einem Ausgangsdatenfunkträger, DRB, für Kommunikation zwischen der Endgerätvorrichtung und der Ausgangsbasisstation vor der Übergabe gehören und die durch die Endgerätvorrichtung nicht richtig empfangen werden; und
Weiterleiten (202, 402, 504, 804), durch die Ausgangsbasisstation an die Zielbasisstation während der Übergabe der Endgerätvorrichtung, von Abwärtsstrecken-PDCP-SDUs des mindestens einen Ausgangs-DRB, die durch die Endgerätvorrichtung nicht richtig empfangen werden, der Reihe nach;
Senden (205, 405, 507, 807), durch die Ausgangsbasisstation, einer zweiten Nachricht an die Zielbasisstation, wobei die zweite Nachricht die Informationen über die mindestens eine erste unbestätigte Abwärtsstrecken-SDU des PDCP umfasst und die zweite Nachricht verwendet wird, eine SN einer PDCP-SDU anzugeben, die durch die Ausgangsbasisstation an die Zielbasisstation während der Übergabe der Endgerätvorrichtung weitergeleitet wird;
wobei die erste Nachricht ferner Informationen über die letzten Abwärtsstrecken-PDCP-SDUs einer Vielzahl von Ausgangs-DRBs für Kommunikation zwischen der Endgerätvorrichtung und der Ausgangsbasisstation umfasst, die während der Übergabevorbereitung auf einen Ziel-DRB für Kommunikation zwischen der Endgerätvorrichtung und der Zielbasisstation neu abgebildet werden, und die Informationen verwendet werden, SNs der letzten Abwärtsstrecken-PDCP-SDUs anzugeben, die zur der Vielzahl von DRBs für Kommunikation zwischen der Endgerätvorrichtung und der Ausgangsbasisstation vor der Übergabe gehören und die durch die Endgerätvorrichtung nicht richtig empfangen werden.

4. Verfahren nach Anspruch 3, wobei, wenn eine Vielzahl von Ausgangs-DRBs für Kommunikation zwischen der Endgerätvorrichtung und der Ausgangsbasisstation auf einen Ziel-DRB für Kommunikation zwischen der Endgerätvorrichtung und der Zielbasisstation neu abgebildet werden, die Ausgangsbasisstation, an die Zielbasisstation basierend auf Prioritäten der Vielzahl von Ausgangs-DRBs während der Übergabe der Endgerätvorrichtung, Abwärtsstrecken-PDCP-SDUs der Reihe nach weiterleitet (504, 804), die zu der Vielzahl von Ausgangs-DRBs gehören und die durch die Endgerätvorrichtung nicht richtig empfangen werden, der Reihe nach.

5. Verfahren nach Anspruch 4, wobei, wenn eine Vielzahl von Ausgangs-DRBs für Kommunikation zwischen der Endgerätvorrichtung und der Ausgangsbasisstation auf einen Ziel-DRB für Kommunikation zwischen der Endgerätvorrichtung und der Zielbasisstation neu abgebildet werden, die zweite Nachricht ferner Informationen über die letzten Abwärtsstrecken-PDCP-SDUs der Vielzahl von Ausgangs-DRBs umfasst.

6. Übergabesteuerungsverfahren, umfassend:
Empfangen (202, 402, 504, 804), durch eine Zielbasisstation während Übergabe einer Endgerätvorrichtung, von Abwärtsstrecken-Paketdatenkonvergenzprotokoll- bzw. PDCP-Dienstdateneinheiten, SDUs, mindestens eines Ausgangsdatenfunkträgers, DRB, die durch eine Ausgangsbasisstation weitergeleitet werden und die durch die Endgerätvorrichtung nicht richtig empfangen werden, der Reihe nach;
Fertigstellen (203, 403, 505, 805), durch die Endgerätvorrichtung, der Übergabe, um auf die Zielbasisstation zuzugreifen; und
erneutes Übertragen (204, 404, 506, 806), durch die Zielbasisstation an die Endgerätvorrichtung, der Abwärtsstrecken-PDCP-SDUs des mindestens einen Ausgangs-DRB, die durch die Endgerätvorrichtung nicht richtig empfangen werden, der Reihe nach und die von einer SN nummeriert sind, die durch Informationen über mindestens eine erste unbestätigte Abwärtsstrecken-SDU eines PDCP angegeben wird, und die durch die Informationen über die mindestens eine erste unbestätigte Abwärtsstrecken-SDU des PDCP angegebene SN mit einer SN einer Abwärtsstrecken-PDCP-SDU korrespondiert, die die erste eine der SDUs des mindestens einen Ausgangs-DRB ist, die durch die Ausgangsbasisstation weitergeleitet werden und die durch die Endgerätvorrichtung nicht richtig empfangen werden, der Reihe nach. Empfangen (205, 405, 507, 807), durch die Zielbasisstation, einer durch die Ausgangsbasisstation gesandten zweiten Nachricht, wobei die zweite Nachricht die Informationen über die mindestens eine erste unbestätigte Abwärtsstrecken-SDU des PDCP umfasst und die zweite Nachricht verwendet wird, eine SN einer PDCP-SDU anzugeben, die durch die Ausgangsbasisstation an die Zielbasisstation während der Übergabe der Endgerätvorrichtung weitergeleitet wird;
wobei während der Übergabevorbereitung eine Vielzahl von Ausgangs-DRBs für Kommunikation zwischen der Endgerätvorrichtung und der Ausgangsbasisstation durch die Zielbasisstation auf einen Ziel-DRB für Kommunikation zwischen der Endgerätvorrichtung und der Zielbasisstation neu abgebildet wird und die zweite Nachricht ferner Informationen über die letzten Abwärtsstrecken-PDCP-SDUs der Vielzahl von Ausgangs-DRBs umfasst.

7. Verfahren nach Anspruch 6, wobei, wenn eine Vielzahl von Ausgangs-DRBs für Kommunikation zwischen der Endgerätvorrichtung und der Ausgangsbasisstation auf einen Ziel-DRB für Kommunikation zwischen der Endgerätvorrichtung und der Zielbasisstation neu abgebildet wird, die Zielbasisstation während der Übergabe der Endgerätvorrichtung Abwärtsstrecken-PDCP-SDUs empfängt (504, 804), die zu der Vielzahl von Ausgangs-DRBs gehören, die durch die Endgerätvorrichtung nicht richtig empfangen werden, der Reihe nach, und die der Reihe nach durch die Ausgangsbasisstation basierend auf Prioritäten der Vielzahl von Ausgangs-DRBs weitergeleitet werden.

8. Verfahren nach Anspruch 6, wobei, wenn eine Vielzahl von Ausgangs-DRBs für Kommunikation zwischen der Endgerätvorrichtung und der Ausgangsbasisstation auf einen Ziel-DRB für Kommunikation zwischen der Endgerätvorrichtung und der Zielbasisstation neu abgebildet wird, das Verfahren umfasst:
der Reihe nach erneutes Übertragen (506, 806), durch die Zielbasisstation an die Endgerätvorrichtung unter Verwendung des Ziel-DRB basierend auf Prioritäten der Vielzahl von Ausgangs-DRBs, von Abwärtsstrecken-PDCP-SDUs, die zu der Vielzahl von Ausgangs-DRBs gehören und die durch die Endgerätvorrichtung nicht richtig empfangen werden, der Reihe nach.

9. Endgerätvorrichtung, konfiguriert zum Durchführen des Verfahrens nach einem der Ansprüche 1 bis 2.

10. Ausgangsbasisstation, konfiguriert zum Durchführen des Verfahrens nach einem der Ansprüche 3 bis 5.

11. Zielbasisstation, konfiguriert zum Durchführen des Verfahrens nach einem der Ansprüche 6 bis 8.

## Revendications

1. Procédé de commande de transfert, comprenant :
la réception (201, 401, 503, 803), par un dispositif terminal, d'un premier message envoyé par une station de base source, dans lequel le premier message comprend des informations relatives à au moins une première unité de données de service, SDU, non acquittée de liaison descendante d'un protocole de convergence de données de paquets, PDCP, le premier message sert à commander le transfert du dispositif terminal sur une station de base cible, et les informations relatives à l'au moins une première SDU non acquittée de liaison descendante du PDCP servant à indiquer un numéro de séquence, SN, d'une SDU de PDCP de liaison descendante qui est la première des SDU qui sont associées à au moins un support radio de données, DRB, source pour une communication entre le dispositif terminal et la station de base source avant le transfert et qui ne sont pas correctement reçues par le dispositif terminal ;
la réalisation (203, 403, 505, 805), par le dispositif terminal, du transfert, pour accéder à la station de base cible ; et
la réception (204, 404, 506, 806), par le dispositif terminal, de SDU de PDCP de liaison descendante de l'au moins un DRB source qui ne sont pas correctement reçues par le dispositif terminal dans l'ordre et qui sont numérotées à partir du SN indiqué par les informations relatives à l'au moins une première SDU non acquittée de liaison descendante du PDCP, dans lequel les SDU de PDCP de liaison descendante de l'au moins un DRB source sont retransmises par la station de base cible ;
dans lequel le premier message comprend en outre des informations relatives aux dernières SDU de PDCP de liaison descendante d'une pluralité de DRB sources entre le dispositif terminal et la station de base source qui est remappée durant une préparation d'un transfert sur un seul DRB cible pour une communication entre le dispositif terminal et la station de base cible, et les informations servent à indiquer des SN des dernières SDU de PDCP de liaison descendante qui sont associées à la pluralité de DRB pour une communication entre le dispositif terminal et la station de base source avant le transfert et qui ne sont pas correctement reçues par le dispositif terminal.

2. Procédé selon la revendication 1, le procédé comprenant, quand une pluralité de DRB sources pour une communication entre le dispositif terminal et la station de base source est remappée sur un seul DRB cible pour une communication entre le dispositif terminal et la station de base cible :
la réception (506, 806), par le dispositif terminal, de SDU de PDCP de liaison descendante qui sont associées à la pluralité de DRB sources, ne sont pas reçues correctement par le dispositif terminal dans l'ordre et sont retransmises séquentiellement par la station de base cible à l'aide du DRB cible en fonction de priorités de la pluralité de DRB sources.

3. Procédé de commande de transfert, comprenant :
l'envoi (201, 401, 503, 803), durant une préparation d'un transfert, par une station de base source, d'un premier message à un dispositif terminal, dans lequel le premier message comprend des informations relatives à au moins une première unité de données de service, SDU, non acquittée de liaison descendante, d'un protocole de convergence de données de paquets, PDCP, le premier message sert à commander le transfert du dispositif terminal sur une station de base cible ; et les informations relatives à l'au moins une première SDU non acquittée de liaison descendante du PDCP servent à indiquer un numéro de séquence, SN, d'une SDU de PDCP de liaison descendante qui est la première des SDU qui sont associées à au moins un support radio de données, DRB, source pour une communication entre le dispositif terminal et la station de base source avant le transfert et qui ne sont pas correctement reçues par le dispositif terminal ; et
le transfert (202, 402, 504, 804), par la station de base source à la station de base cible durant le transfert du dispositif terminal, de SDU de PDCP de liaison descendante de l'au moins un DRB source qui ne sont pas correctement reçues par le dispositif terminal dans l'ordre ;
l'envoi (205, 405, 507, 807), par la station de base source, d'un second message à la station de base cible, dans lequel le second message comprend les informations relatives à l'au moins une première SDU non acquittée de liaison descendante du PDCP, et le second message sert à indiquer un SN d'une SDU de PDCP transmise par la station de base source à la station de base cible durant le transfert du dispositif terminal ;
dans lequel le premier message comprend en outre des informations relatives aux dernières SDU de PDCP de liaison descendante d'une pluralité de DRB sources pour une communication entre le dispositif terminal et la station de base source, laquelle est remappée durant une préparation de transfert sur un seul DRB cible pour une communication entre le dispositif terminal et la station de base cible, et les informations servent à indiquer des SN des dernières SDU de PDCP de liaison descendante qui sont associées à la pluralité de DRB pour une communication entre le dispositif terminal et la station de base source avant le transfert et qui ne sont pas correctement reçues par le dispositif terminal.

4. Procédé selon la revendication 3, dans lequel lorsqu'une pluralité de DRB sources pour une communication entre le dispositif terminal et la station de base source est remappée sur un seul DRB cible pour une communication entre le dispositif terminal et la station de base cible, la station de base source transmet séquentiellement (504, 804), à la station de base cible en fonction de priorités de la pluralité de DRB sources durant le transfert du dispositif terminal, des SDU de PDCP de liaison descendante qui sont associées à la pluralité de DRB sources et qui ne sont pas correctement reçues par le dispositif terminal dans l'ordre.

5. Procédé selon la revendication 4, dans lequel lorsqu'une pluralité de DRB sources pour une communication entre le dispositif terminal et la station de base source est remappée sur un seul DRB cible pour une communication entre le dispositif terminal et la station de base cible, le second message comprend en outre des informations relatives aux dernières SDU de PDCP de liaison descendante de la pluralité de DRB sources.

6. Procédé de commande de transfert, comprenant :
la réception (202, 402, 504, 804), par une station de base cible durant un transfert d'un dispositif terminal, d'unités de données de service, SDU, de liaison descendante d'un protocole de convergence de données par paquets, PDCP, d'au moins un support radio de données, DRB, source qui sont transmises par une station de base source et qui ne sont pas correctement reçues par le dispositif terminal dans l'ordre ;
la réalisation (203, 403, 505, 805), par le dispositif terminal, du transfert, pour accéder à la station de base cible ; et
la retransmission (204, 404, 506, 806), par la station de base cible au dispositif terminal, des SDU de PDCP de liaison descendante de l'au moins un DRB source qui ne sont pas correctement reçues par le dispositif terminal dans l'ordre et qui sont numérotées à partir d'un SN indiqué par des informations relatives à au moins une première SDU non acquittée de liaison descendante d'un PDCP, et le SN indiqué par les informations relatives à l'au moins une première SDU non acquittée de liaison descendante du PDCP correspond à un SN d'une SDU de PDCP de liaison descendante qui est la première des SDU de l'au moins un DRB source qui sont transmises par la station de base source et qui ne sont pas correctement reçues par le dispositif terminal dans l'ordre,
la réception (205, 405, 507, 807), par la station de base cible, d'un second message envoyé par la station de base source, dans lequel le second message comprend les informations relatives à l'au moins une première SDU non acquittée de liaison descendante du PDCP, et le second message sert à indiquer un SN d'une SDU de PDCP transmise par la station de base source à la station de base cible durant le transfert du dispositif terminal ;
dans lequel, durant la préparation de transfert, une pluralité de DRB sources pour une communication entre le dispositif terminal et la station de base source est remappée par la station de base cible sur un seul DRB cible pour une communication entre le dispositif terminal et la station de base cible, et le second message comprend en outre des informations relatives aux dernières SDU de PDCP de liaison descendante de la pluralité de DRB sources.

7. Procédé selon la revendication 6, dans lequel quand une pluralité de DRB sources pour une communication entre le dispositif terminal et la station de base source est remappée sur un seul DRB cible pour une communication entre le dispositif terminal et la station de base cible, la station de base cible reçoit (504, 804), durant le transfert du dispositif terminal, des SDU de PDCP de liaison descendante qui sont associées à la pluralité de DRB sources, ne sont pas correctement reçues par le dispositif terminal dans l'ordre et sont transmises séquentiellement par la station de base source en fonction de priorités de la pluralité de DRB sources.

8. Procédé selon la revendication 6, le procédé comprenant, quand une pluralité de DRB sources pour une communication entre le dispositif terminal et la station de base source est remappée sur un seul DRB cible pour une communication entre le dispositif terminal et la station de base cible :
la retransmission séquentielle (506, 806), par la station de base cible, au terminal à l'aide du DRB cible en fonction de priorités de la pluralité de DRB sources, des SDU de PDCP de liaison descendante qui sont associées à la pluralité de DRB sources et qui ne sont pas correctement reçues par le dispositif terminal dans l'ordre.

9. Dispositif terminal, configuré pour réaliser le procédé selon la revendication 1 ou 2.

10. Station de base source configurée pour réaliser le procédé selon l'une quelconque des revendications 3 à 5.

11. Station de base cible configurée pour réaliser le procédé selon l'une quelconque des revendications 6 à 8.
